(19) Europäisches Patentamt
European Patent Office
Office européen des brevets

(11) **EP 4 375 886 A1**

(12) **EUROPEAN PATENT APPLICATION**

(43) Date of publication:
**29.05.2024 Bulletin 2024/22**

(21) Application number: **22209132.4**

(22) Date of filing: **23.11.2022**

(51) International Patent Classification (IPC):
**G06N 10/40** (2022.01)   **G06N 10/20** (2022.01)

(52) Cooperative Patent Classification (CPC):
**G06N 10/40; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Robert Bosch GmbH**
  **70469 Stuttgart (DE)**

• **BASF SE**
  **67056 Ludwigshafen am Rhein (DE)**

(72) Inventor: **Vogt, Nicolas**
**76131 Karlsruhe (DE)**

(74) Representative: **Peterreins Schley**
**Patent- und Rechtsanwälte PartG mbB**
**Hermann-Sack-Straße 3**
**80331 München (DE)**

(54) **DIGITAL QUANTUM SIMULATIONS OF FERMION-BOSON SYSTEMS IN TWO-DIMENSIONAL QUANTUM COMPUTING SYSTEMS**

(57)    One aspect of the present disclosure relates to a method for configuring a quantum computing system, wherein the quantum computing system comprises a plurality of qubits arranged on a two-dimensional, 2D, lattice and configured to perform a plurality of quantum computational operations. The method of the present disclosure includes receiving a selection of a first plurality of qubits and a second plurality of qubits of the plurality of qubits that represent two different degrees of freedom related to respective constituents of a physical system to be mapped onto these first and second pluralities of qubits. Adjacent qubits of the first aspect are configured to transmit quantum information between each other. A number of chains of the first plurality of qubits and a number of ladders of the second plurality of qubits are configured to perform a plurality of quantum computational operations.

**Fig. 2a**

EP 4 375 886 A1

## Description

### Technical field

This specification relates to a method for configuring a quantum computing system. Associated aspects concern quantum computing systems, and a remote computing system.

### Background

There is a growing interest for the implementation of quantum computations on various physical systems to solve a variety of real-world problems, such as those dealing with chemistry, biology, solid-state physics and cryptographic systems (see, e.g., E. Grumbling and M. Horowitz, "Quantum Computing: Progress and Prospects" Washington, DC: The National Academies Press, 2019; https://doi.org/10.17226/25196). The goal is to speed up calculations as compared to classical computers and/or to solve a class of problems that cannot be solved even on a supercomputer that performs classical computations based on classical algorithms. In the field of physical simulation on quantum computers, there are a number of applications, for example in solid-state physics and chemistry, that require the combined quantum simulation of fermionic baths and non-interacting baths on the quantum computer. These can be physical problems in which the non-interacting baths take the form of bosonic modes or non-interacting fermionic modes.

Some of the known prior art techniques are concerned with the implementation of both fermionic degrees of freedom and bosonic modes, as well as their possible interactions on the qubits of a quantum computer. However, the number of quantum computational operations required for quantum simulation of physical problems dealing with interacting fermions and bosons performed on the architectures of some prior art quantum computers is so large that the overall quantum simulation becomes time consuming, such that quantum qubits may lose their coherence in a time interval that is smaller than that required to complete a quantum computational task.

Therefore, there is a need for developing new efficient techniques for reducing the number of quantum computational operations required to perform a quantum simulation of fermion-boson interacting systems on a quantum computer.

### Summary

A first aspect of the present disclosure relates to a method for configuring a quantum computing system, wherein the quantum computing system comprises a plurality of qubits arranged on a two-dimensional, 2D, lattice and configured to perform a plurality of quantum computational operations. The method of the present disclosure includes receiving a selection of a first plurality of qubits of the plurality of qubits, wherein the first plurality of qubits comprises a number of chains of qubits. In the method of the first aspect, each qubit of the number of chains of the first plurality of qubits represents a first degree of freedom related to respective constituents of a physical system to be mapped onto the number of chains of the first plurality of qubits. Furthermore, each qubit of the first plurality of qubits is configured to transmit quantum information of said qubit to another qubit of the first plurality of qubits that is adjacent to said qubit, wherein the other qubit of the first plurality of qubits is configured to receive the quantum information of said qubit of the first plurality of qubits. The method further comprises receiving a selection of a second plurality of qubits of the plurality of qubits, wherein the second plurality of qubits comprises a number of ladders of qubits, wherein each ladder of qubits represents a second degree of freedom related to respective constituents of the physical system to be mapped onto the number of ladders of the second plurality of qubits. The second degree of freedom of the first aspect is different from the first degree of freedom. In the first aspect of the present disclosure, each qubit of the second plurality of qubits is configured to transmit the quantum information of said qubit to another qubit of the second plurality of qubits that is adjacent to said qubit, wherein the other qubit of the second plurality of qubits is configured to receive the quantum information of said qubit of the second plurality of qubits. In the method of the first aspect, one or more qubits of the number of chains of the first plurality of qubits are adjacent to respective one or more qubits of the number of ladders of the second plurality of qubits and are configured to transmit the quantum information to and/or receive the quantum information from the respective one or more qubits of the number of ladders of the second plurality of qubits. The number of chains of the first plurality of qubits and the number of ladders of the second plurality of qubits of the method are configured to perform a plurality of quantum computational operations.

A second aspect provides a quantum computing system configured in accordance with any of the steps of the techniques according to the first aspect.

A third aspect provides a quantum computing system configured to perform the plurality of quantum computational operations and adapted to carry out any of the steps of the techniques according to the first aspect.

A fourth general aspect of the present disclosure relates to a remote computing system comprising a quantum computing system and configured to perform a quantum computational task, wherein the quantum computational task comprises a plurality of quantum computational operations in accordance with the first aspect. The plurality of quantum computational operations of the fourth aspect can be performed in accordance with any one of the method steps of the first aspect. The remote computing system of the fourth aspect is further configured to transmit results of the computational task to a computer-implemented system.

The technique of the first to fourth aspects can have advantageous technical effects.

Firstly, the techniques of the present disclosure involve performing digital quantum simulations of fermionic systems interacting with non-interacting baths (e.g., fermion-boson interacting systems) on a quantum computing system comprising a hardware architecture (e.g., one or more chips) having qubits arranged in a 2D lattice, with a reduced number of required quantum computational operations compared to some prior art techniques. For example, in some prior art techniques using a quantum computer with two-dimensional connectivity, one needs $O(\sqrt{N}+\sqrt{M})$ SWAP/fermionic SWAP operations for every interaction between fermionic degrees of freedom and a bosonic mode, where $N$ is a number of qubits representing the fermionic degrees of freedom and $M$ is a number of qubits representing the bosonic mode. In some cases, qubit configurations on a 2D lattice of the present techniques allow to reduce the number of quantum computational operations necessary to implement every interaction between the fermionic degrees of freedom and a non-interacting bath (e.g., a bosonic mode) from $O(\sqrt{N}+\sqrt{M})$ to O(1). Furthermore, in some embodiments of the present techniques, the use of a quantum exchange register can allow further reduction of the required fermionic exchanges in the course of the quantum simulation of a fermion-boson system. Therefore, the total number of quantum computational operations can be significantly reduced as compared to some prior art techniques.

Secondly, a number of quantum gates necessary to accomplish the quantum computational task can be diminished by using qubit configurations of the present techniques, resulting in a reduction of the total decoherence or inaccuracies that occur in the quantum computing system: Each quantum gate may be a potential source of decoherence and/or inaccuracies related to the fact that a physical realization of a quantum gate may not match a user-specified logical gate operation (this problem is referred to as gate infidelity). Thus, in the present techniques, a gain in reducing the total number of quantum computational operations and the resulting computational time on qubits of the 2D lattice becomes even more significant as compared to some prior art techniques when the two aforementioned factors are considered together.

Thirdly, the techniques of the present disclosure enable execution of some quantum computational operations in parallel that cannot be performed in parallel in some techniques of the prior art. This can provide an additional speed up in performing quantum computational operations, which may lead to preservation of coherence between qubits throughout the entire execution time of a quantum computational task.

Some terms are used in the present specification in the following manner:

The term "qubit" (or a quantum bit) may refer to a quantum-mechanical system with (at least) two quantum states or any superposition of these quantum states, which is also called a two-level system for short. The two-level system is an elementary unit carrying quantum information into which quantum information may be encoded and from which it can be retrieved. For instance, the spin of the electron in a magnetic field with two energy levels and corresponding spin-up and spin-down states is the physical realization of a qubit. Another physical realization deals with the polarization of a single photon in which two orthogonal polarizations can be considered as the two qubit states. In some cases, two quantum states may be associated with two different energy levels, for instance, two selected energy levels in an anharmonic energy spectrum (or, in other words, an anharmonic ladder of energy levels) of a physical system that serves as a physical realization of a qubit (this may be the case, e.g., with superconducting qubits). In other cases, two quantum states may be associated with two degenerate energy levels (i.e., they share the same energy value), which may be the case in photonic quantum computers. A quantum state of a single qubit can be described by a wavefunction, which can be represented as a vector in a two-dimensional complex space, and changes in its quantum state (e.g., owing to the time evolution of the qubit state and/or as a result of applying a quantum gate operation) may be visualized on a Bloch sphere (see, e.g., M. A. Nielsen and I. L. Chuang, "Quantum Computation and Quantum Information": 10th Anniversary Edition, Cambridge University Press, 2010). Quantum computing may involve quantum computational operations on multiple qubits (see also discussions below), such that their multi-qubit quantum state may be manipulated and changed. In some cases, each qubit of the multiple qubits can be treated independently from each other, in which case the multi-qubit quantum state may be written as a separable quantum state, i.e. it can be represented as a tensor product of each single-qubit state (and can ultimately be represented as a corresponding superposition of quantum states of individual qubits). In other cases, when at least two qubits from the multiple qubits cannot be treated independently from each other (or, in other words, they cannot be described separately from each other), the multi-qubit quantum state represents an entangled state that cannot be represented in terms of the tensor product of individual qubit states (see also discussions further below, where both situations are discussed in more details).

There are a number of physical realizations of systems that can be used as qubits (i.e., as two-level systems) in the context of quantum computing. The qubits of the present disclosure are not limited to a particular physical realization. An example of such physical realizations are quantum computers based on cavity quantum electrodynamics (cQED), where a qubit is provided by the internal state of trapped atoms coupled to high-finesse cavities. One example of quantum computing using circuit quantum electrodynamics is superconducting quantum computing based on superconducting qubits coupled to a microwave cavity (referred to as a quantum bus) and radiating in the microwave region, whose quantum state is manipulated by electromagnetic pulses to control a magnetic flux, an electric charge, or a phase difference across a nano-fabricated Josephson junction, see, e.g., https://doi.org/10.1038/nature07128. Another example relates to solid-state nuclear magnetic resonance (NMR) Kane quantum computers with qubits realized as the nuclear spin states of donor atoms (e.g., phosphorus donor atoms) embedded into a respective host lattice (e.g., in a pure silicon lattice). In some other examples, a physical implementation of a quantum computer may be based on neutral atoms in optical lattices, when a qubit is implemented by internal states of neutral atoms (e.g., Rydberg atoms) trapped in an optical lattice (which, e.g., interact via Rydberg interactions with each other), see, e.g., https://doi.org/10.1088/0953-4075/49/20/202001. In still other examples, a quantum computer can be a quantum dot computer, where a qubit is given by respective spin states of trapped electrons.

The term "quantum computational operations" and related term "quantum computation" may refer to operations on qubits that can change their quantum state. The quantum computational operations on one or multiple qubits can be carried out by quantum gates that manipulate a quantum state of the qubits or, in other words, with the quantum information carried by them. As is disclosed further below, a single qubit may form a single-qubit quantum state (e.g., a ground state, an excited state, or a superposition of both). In some cases, multiple qubits can form a multi-qubit quantum state that can be a tensor product state or an entangled state (see discussions below for more detail). In some cases, quantum computational operations can be represented by a sequence of quantum gates acting on respective qubits. Quantum gates may be represented by unitary operators $U$ (represented, e.g., by respective unitary matrices) that ensure the norm conservation of a qubit's wavefunction in the absence of dissipation, such that a product of this operator with its Hermitian conjugate is equal to the identity operator, $UU^\dagger = I$, where † stays for a Hermitian conjugate and I is the identity operator. Thus, quantum gates are configured to perform unitary transformations on the qubits, that is, in other words, said unitary operators representing quantum gates perform the unitary transformations on a quantum state of qubits (see also discussions below). The Hadamard gate $H$, phase gate S, $\pi/8$-gate and Pauli X-, Y- and Z-gates are examples of single qubit gates whose action on a qubit can be visualized on the Bloch sphere mentioned above (see, e.g., the book by M. A. Nielsen and I. L. Chuang mentioned above). An arbitrary quantum computation on one or more qubits can be generated by a finite set of qubit gates that is said to be universal for quantum computation. In this case, any unitary operation representing this quantum computation on qubits may be decomposed into a set of operations performed by a quantum circuit comprising the gates from this finite set. Any unitary operation (e.g., a unitary operation performed on any multiple qubit logic gate) may be composed from two-qubit controlled-NOT (CNOT) gates and a corresponding number of single qubit gates, i.e., single-qubit rotations with a number of free parameters characterizing the unitary operation under consideration. For example, any unitary operation can be approximated (to a given accuracy) by means of Hadamard, phase, CNOT and $\pi/8$-gates that are also referred to as universal quantum gates (see, e.g., M. A. Nielsen and I. L. Chuang, "Quantum Computation and Quantum Information": 10th Anniversary Edition, Cambridge University Press, 2010). For example, in the context of superconducting qubits, single qubit gates can be realized by rotations between the two energy levels of a single superconducting qubit induced by microwave pulses sent to a transmission line coupled to the qubit, with a frequency resonant with the energy separation between the levels. Furthermore, two-qubit gates can be realized by coupling two superconducting qubits, for instance, via a microwave cavity or an intermediate electrical coupling circuit (see, e.g., https://doi.org/10.1038/nature02851). In the context of neutral-atom quantum computing, two-qubit gates can be realized using controllable Rydberg interactions between neutral atoms that are sufficiently strong to perform two-gate operations, see, e.g., https://doi.org/10.1103/PhysRevX.10.021054.

The term "unitary transformation" applied to qubits as used herein should be broadly construed in the present disclosure and may be referred to a unitary transformation of a quantum state of qubits caused by a unitary operation acting on said qubits, which can be defined by a unitary operator acting on their quantum state. For example, quantum computational operations, such as those applying different one- or multiple quantum gates (represented by respective unitary operators) to the qubits, can lead to unitary transformations of the quantum state of qubits. In other words, one or more unitary transformations of the quantum state of one or more qubits associated with a respective gate applied to the one or more qubits can execute said gate in the corresponding subspace of the Hilbert space of qubits, while the unity transformation (or, in other words, the unity operation) is applied to the rest of the Hilbert space. (The Hilbert space in this context can be understood as a complex vector space spanned by vectors representing quantum states of qubits with a defined inner product between them.) In some cases, the quantum state of qubits can evolve unitarily in accordance with a Hamiltonian of qubits (e.g., Jaynes-Cummings Hamiltonian in cQED), which is a Hermitian operator that determines their interactions with external controlling fields (e.g., a magnetic field), as well as qubits' coupling with a hosting lattice or cavities (e.g., quantum buses in the context of superconducting quantum computing) and their possible mutual interactions (such as, e.g., dipole-dipole interactions in the context of Rydberg atoms). This unitary time evolution of the quantum state of qubits (represented by a unitary time evolution operator) that occurs during quantum computing is also referred to as the "unitary transformation" in the present specification. As follows from the discussions above, a single-qubit rotation is a specific case of a unitary transformation.

In the present disclosure, the "quantum computational operations" performed on qubits of the quantum computing system can be carried out to simulate a time evolution of a physical system under consideration that is governed by a respective quantum Hamiltonian $\mathcal{H}$. The physical system of interest "can be encoded into the qubits" of the quantum computing system, so that a unitary time evolution of constituents of the physical system (see next paragraph for details) is translated from said constituents into qubits allowing the quantum computing system to simulate the unitary time evolution of the physical system under consideration. In other words, the quantum state of qubits of the quantum computing system may evolve unitarily in accordance with the Hamiltonian of the physical system $\mathcal{H}$ encoded into the said qubits, in which case the time evolution of the physical system can be implemented, e.g., as a sequence of quantum gates acting on the qubits (i.e., gates available at a specific architecture of a quantum computer and/or a qubit topology). Therefore, the "quantum computational operations" of the present disclosure, which are performed on the qubits of the quantum computing system, may be referred to as "digital quantum simulations" of the physical system of interest on the quantum computing system. For example, the occupation of fermionic orbitals (more precisely, the electron distribution in atomic or molecular orbitals) and/or bosonic modes may be represented by respective qubits (i.e., a respective quantum state of said qubits). In the present disclosure, "encoding into the qubits" can be used along with "mapping onto the qubits" that has the same meaning.

The "physical system" as used herein can be any quantum physical system that evolves in accordance with the respective quantum Hamiltonian $\mathcal{H}$ and comprises corresponding constituents (e.g., one or any combination selected from the following not exhausting list: atoms, ions, molecules, quantum dots, photons, holes, phonons, Cooper pairs, excitons, polaritons, magnons, polarons) that may interact with each other. For example, the constituents of one species may interact with constituents of the same species (e.g., electron-electron interactions) and/or of another species (e.g., electron-phonon interactions). In this regard, the term "degrees of freedom" can be used in some cases of the present disclosure to indicate whether a spin quantum number of respective constituents has an integer value (e.g., 0, 1, 2, or any other integer value) or a half odd integer value (e.g., 1/2, 3/2, 5/2, or any other half odd integer values) resulting in the corresponding quantum statistics of these constituents. For example, one or more constituents of the physical system may be fermionic particles possessing a spin with a half odd integer value (e.g., electrons or other particles) or fermionic quasiparticles (e.g., holes, polarons or other quasiparticles) that obey Fermi-Dirac statistics, with "fermionic degrees of freedom" associated with such constituents. The other one or more constituents of said physical system may be bosons such as single particles (e.g., photons), composite particles (such as some real or artificial atoms), or quasiparticles (e.g., Cooper pairs, collective excitations such as phonons, excitons, magnons or others) that obey Bose-Einstein statistics, in which case they may be referred to as bosonic modes. In other examples of the present disclosure, the bosonic modes can represent non-interacting fermionic modes, e.g., the non-interacting fermionic modes of a dynamical mean-field theory (DMFT) baths: One example of fermionic systems in contact with non-interacting fermionic baths deals with single-electron nanoelectronic circuits that provide electrons (fermionic degrees of freedom) and their conductor contacts playing a role of non-interacting fermionic baths (in some cases such a non-fermionic bath may be equivalent to a bosonic mode for the purpose of the present specification), see, e.g., https://doi.org/10.1109/5.752518.

An example for a physical system that comprises fermionic degrees of freedom interacting with bosonic modes is the physical system including electrons and phonons interacting with each other whose evolution can be described by the Frohlich or Holstein Hamiltonian (see, e.g., G. D. Mahan, "Many Particle Physics", Springer, New York, 2000; https://10.1103/PhysRevLett.109.200501). A non-exhaustive list of further examples includes physical systems including fermions in contact with bosonic baths in the context of the tunneling problem that is used to derive the so-called P(E) theory (see, e.g., https://arxiv.org/pdf/cond-mat/0508728.pdf ), the interaction of electronic systems with an electromagnetic radiation field (see e.g. https://arxiv.org/pdf/1804.07142.pdf or https://arxiv.org/pdf/1501.00803.pdf), the boson mediated interaction of fermionic modes as commonly found in high energy physics (see, e.g., http://arxiv.org/abs/1404.2868), ultracold fermion-boson mixtures (see, e.g., https://arxiv.org/pdf/1212.3535.pdf) as well as other various physical systems arising in the context of solid-state physics and quantum chemistry.

In the present specification, "transmitting quantum information" (or "exchanging quantum information" used in some cases in the similar context) between qubits within the same or different species of qubits should be broadly construed. In some cases, transmitting/exchanging the quantum information between two adjacent qubits may include applying a unitary transformation to said qubits, e.g., using one or more two-qubit gates or, in some examples, one or more single- or multi-qubit gates in addition to said two-qubit gates. It should be noted that "transmitting the quantum information" between two adjacent qubits involving unitary transformations may include a direct (physical) interaction between these qubits and/or interaction of these qubits via, e.g., a hosting lattice/quantum bus (in the sense described above). In some examples of the present specification, "the quantum information" may be transmitted/exchanged between distant qubits via respective unitary transformations applied between adjacent qubits arranged between said distant qubits. In the present techniques, "the quantum information" between adjacent qubits may be transmitted/exchanged - a step that can be a part of the quantum computational operations performed on the quantum computing system. In some cases, "the quantum information" may be transmitted/exchanged, for example, one or more times during the course of quantum computational operations, e.g., to simulate a unitary time evolution of the physical system (or, in other words, its quantum Hamiltonian) on the quantum computing system within a (pregiven) time step (see also discussions further below). Furthermore, when "the quantum information" can be transmitted from one qubit to another adjacent qubit in the aforementioned sense, the qubit to which "the quantum information" is transmitted may be referred to as being configured to receive "the quantum information".

In the present disclosure, one type of the aforementioned "degrees of freedom" ("a first degree of freedom"), for example, the "fermionic degrees of freedom" can be encoded by (or, in other words, mapped to) a number of qubits that represent the "first degrees of freedom", while another number of qubits can represent another type of the "degrees of freedom" ("a second degree of freedom"), for example, the "bosonic modes". Such a division of qubits into different species encoding different degrees of freedom may be interpreted in such a way that "the quantum computational operations" performed on qubits representing, e.g., the "fermionic degrees of freedom" are (at least partially) associated with the "fermionic degrees of freedom" (which is described by respective terms of the system's quantum Hamiltonian $\mathcal{H}$ ), while the "quantum computational operations" carried out on the other qubits that represent, e.g., the "bosonic modes", are (at least partially) associated with the "bosonic modes". In some cases, adjacent qubits of different species (e.g., when one qubit represents a "fermionic degrees of freedom" and another adjacent qubit represents "a bosonic mode") may involve "the quantum computational operations" associated with both degrees of freedom.

In the present specification, encoding of the "degrees of freedom" may be non-local in nature, that is to say, a number of qubits (e.g., two or more qubits from this number of qubits or all of them) representing the "degrees of freedom" of a type under consideration may comprise "at least partial information" about a single degree of freedom of this type (e.g., a quantum state of the number of qubits may depend on said single degree of freedom). For example, the Jordan-Wigner transformation (see, e.g., https://doi.org/10.1103/PhysRevLett.120.110501) used to encode the "fermionic degrees of freedom" on qubits is non-local, so that a fermionic parity of a single orbital can be encoded into a number of qubits (e.g., all qubits of this species that represent "the fermionic degrees of freedom"). In some cases, encoding of the "bosonic modes" may also involve non-locality, in which case, for example, all qubits of a ladder (e.g., $n$ qubits) together encode "the bosonic mode": For example, in binary encoding, the occupation number of a bosonic mode in terms of the Fock states $|n\rangle_b$ ($n$ stands of any integer number or zero and a subscript b for a bosonic mode) can be expressed as a binary number represented in the $2^n$ occupation qubit states. In other example related to the unary encoding, the occupation numbers of the bosonic mode from $|0\rangle_b$ to $|n\rangle_b$ can be expressed for $n$ qubits, in that for occupation number $|k\rangle_b$, one qubit $n$ - $k$ is in state $|1\rangle$ and all other qubits are in state $|0\rangle$. The binary, unary, as well as other possible encodings are described in https://doi.org/10.1038/s41534-020-0278-0 . In the following, the term "qubit ladder" (used to encode, e.g., "the bosonic mode") is also used below and is a synonym for the term "ladder of qubits".

In the present disclosure, in the course of performing "quantum computational operations" on qubits representing, for example, the "first degrees of freedom" (implemented, e.g., as a sequence of respective quantum gates), an entangled multi-qubit state can be established (see discussions further above), despite an initial quantum state of these qubits is selected to be as a separable quantum state. In this case each qubit participating in forming the multi-qubit state may comprise "at least partial information" about a number of the first degrees of freedom (e.g., two or more first degrees of freedom). Similar considerations may also apply to the "second degrees of freedom". In some cases, when adjacent qubits of different species exchange the quantum information, the entangled state can be formed on the qubits of different species, such as those that represent both the "first degrees of freedom" and the "second degrees of freedom". In this case, each qubit participating in forming of this multi-qubit state can be said to comprise "at least partial information" about degrees of freedom of both types (e.g., one or more fermionic degrees of freedom and one or more bosonic modes).

The term "adjacency" (or the attribute "adjacent") with respect to qubits (arranged, e.g., on a 2D lattice) should be broadly construed in the present disclosure, so that two qubits may be classified as adjacent if universal quantum gates acting on the two qubits may be realized without requiring one or more separate quantum gates between any qubit of these two qubits and a third qubit. For example if the quantum computer provides all unitary operations related to a universal gate set acting on the two qubits without involving a third qubit or if they are coupled physically on hardware or if hardware-native two-qubit gates acting on the two qubits may be realized without requiring separate quantum gates between each individual qubit of the two qubits and a third qubit. In some examples, qubits may be classified as adjacent if, for example, they are nearest-neighbor qubits within the same or different species of qubits (e.g., one species can stand for qubits that represent fermionic degrees of freedom, while the other may be qubits, e.g., ladders of qubits representing bosonic modes) or if a distance between qubits under consideration is equal to or less than a predetermined characteristic distance (see also later discussions). A spatial separation of qubits may be a decisive factor when they interact directly with each other, for example, via dipole-dipole interactions, as is the case, e.g., for dipole-dipole interactions of optically trapped Rydberg atoms, see, e.g., https://doi.org/10.1088/0953-4075/49/20/202001. In other examples, a spatial distance between qubits may not be a relevant factor, or at least not only the relevant factor that determines the adjacency of qubits. For example, semiconductor qubits can be coupled with each other via a quantum bus to which these qubits are coupled, so that the qubit coupling can be adjusted by a magnetic flux control of these qubits and their spatial separation may not be a decisive factor. For example, when the qubit coupling exceeds a predetermined critical value such that a two-qubit gate may be realized based on these two qubits (without involving a third qubit) or these two qubits may form an entangled state, said qubits may be considered as adjacent qubits. In this case their spatial separation may not be a decisive factor. In some other examples, the qubit-qubit coupling of superconducting qubits may be adjusted by connecting them to an intermediate electrical coupling circuit, see, e.g., https://doi.org/10.1038/s41586-019-1666-5 .

The term "a chain of qubits" as used herein should be broadly construed in the present disclosure referring to a one-dimensional (ID) spatial arrangement of qubits of the same species on a plane of a 2D lattice (e.g., along a 1D curve or a straight line). In some cases, a species of qubits can comprise one or more connected chains of qubits extending in one or more directions. In addition or alternatively, a species of qubits can comprise one or more disconnected chains of qubits extending in one or more directions that are interrupted, e.g., by one or more chains of another species of qubits.

**Description of the Figures**

**Fig. 1a** is a flow diagram illustrating a method for configuring a quantum computing system according to the first aspect. **Figs. 1b** to **1d** are flow diagrams showing further possible method steps according to the first aspect.

**Figs. 2a** and **2b** show schematically two possible quantum computing systems 1000 of the present techniques with qubits arranged on a 2D lattice.

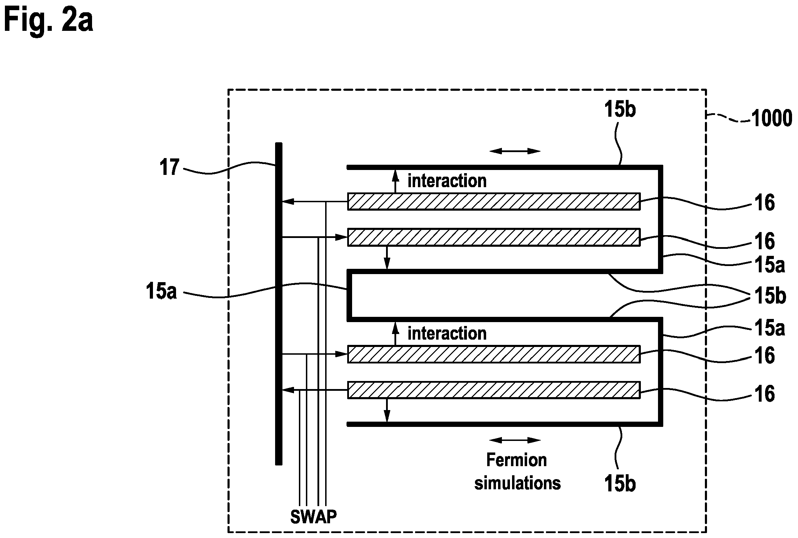

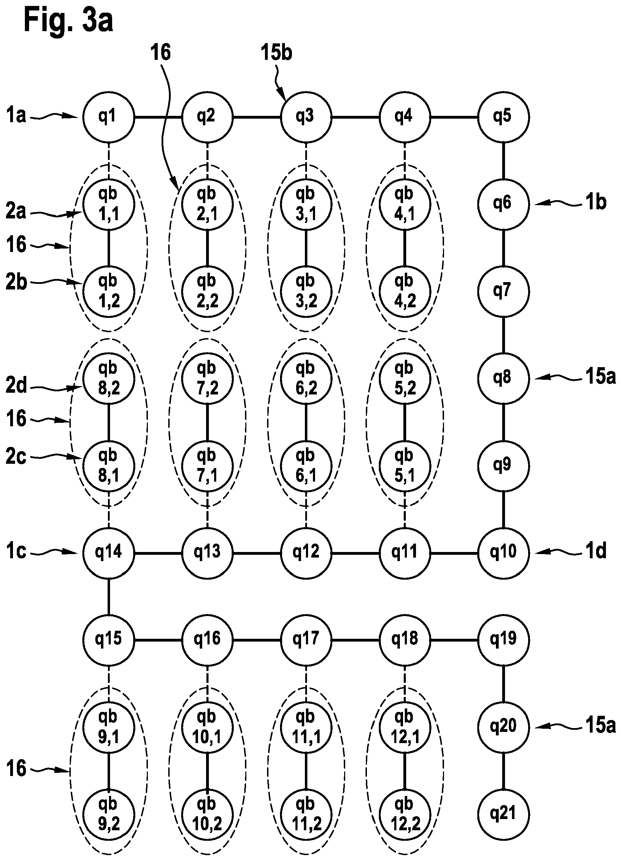

**Fig. 2a:** Multiple connected qubit chains that represent first degrees of freedom (e.g., fermionic degrees of freedom) comprise three qubit chains 15a aligned in the vertical direction and four qubit chains 15b aligned in the horizontal direction. The multiple connected qubit chains are arranged in serpentines that extend in the vertical direction. Each from the four qubit chains 15b aligned in the horizontal direction is adjacent to a respective ladder from a number of qubit ladders 16 representing second degrees of freedom (e.g., bosonic modes), see also **Fig. 3a** for details.

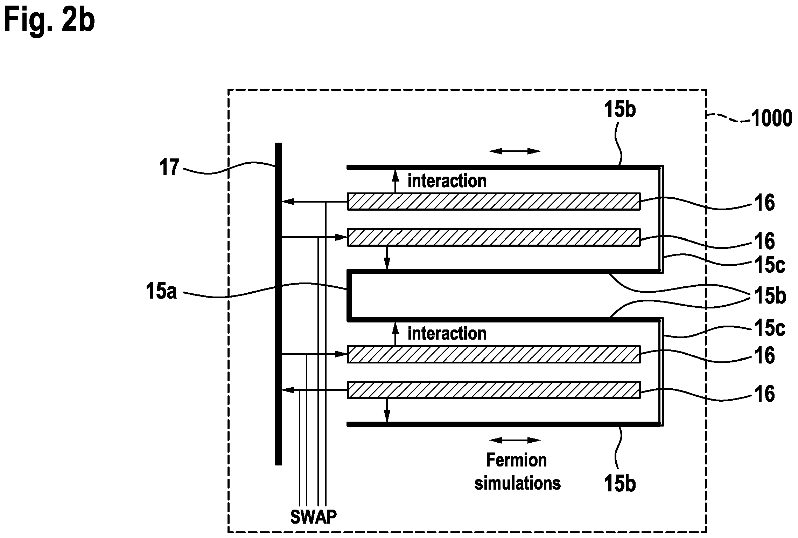

**Fig. 2b:** One pair of qubits chains 15b that are aligned in the horizontal direction connected by a chain 15a extending in the vertical direction and two qubit chains 15b aligned in the horizontal direction represent the first degrees of freedom. Each from the four qubit chains 15b aligned in the horizontal direction is adjacent to a respective ladder from a number of qubit ladders 16 representing the second degrees of freedom (see also

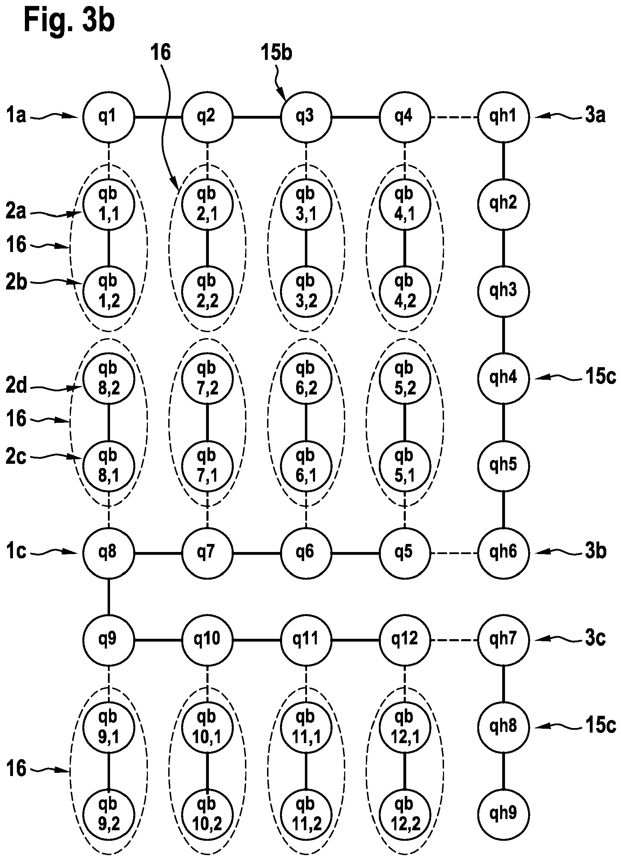

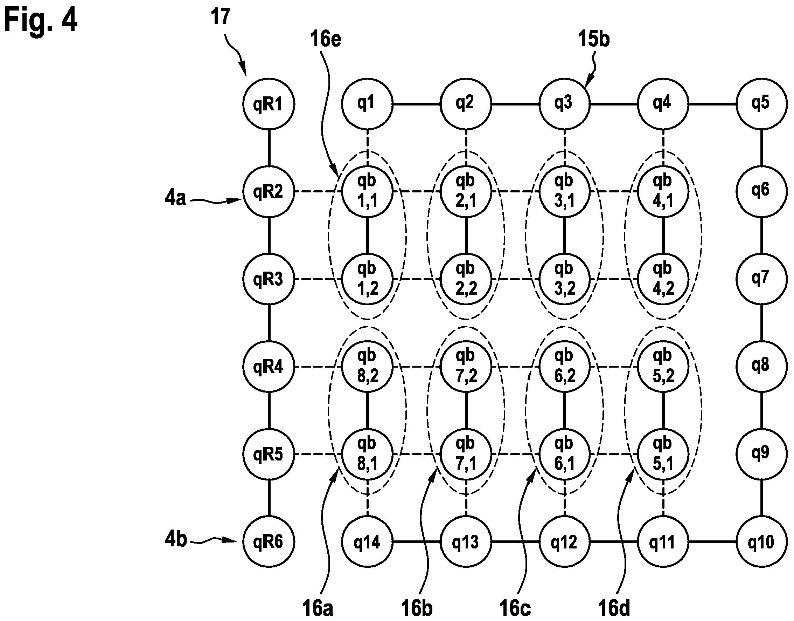

**Fig. 3b** for details). Two vertical auxiliary qubit chains 15c can be used to exchange the quantum information between subsequent disconnected qubit chains 15b aligned in the horizontal direction (e.g., by using SWAP operations). On the left hand side of both figures **Figs. 2a** and **2b,** a quantum exchange register 17 is shown, which comprises chains that can be used to exchange the quantum information between qubit ladders of different sets of qubit ladders 16, e.g. by using the SWAP operations (see also **Fig. 4).**

**Figs. 3a** and **3b** present two possible topologies that specify the arrangement of qubits shown on, respectively, **Figs. 2a** and **2b:** A 2D lattice comprising a plurality of square cells with four qubits at the vertices of a square cell. In **Figs. 3a** and **3b** only upper parts of the corresponding **Figs. 2a** and **2b** are shown for simplicity (the lower qubit ladder 16 and the lower horizontal qubit chain 15b of **Figs. 2a** and **2b** are omitted in **Figs. 3a** and **3b).** For the sake of simplicity, the quantum exchange register 17 is omitted on these figures. The qubit arrangements of **Figs. 3a** and **3b** may also be separate topologies independent on those shown in **Figs. 2a** and **2b.** Each ladder 16 representing a respective second degree of freedom (e.g., a bosonic mode) comprises two qubits 2a, 2b; 2c, 2d enclosed in a dashed ellipse. In total, three sets of qubit ladders are displayed in both figures, wherein each set comprises four ladders.

Solid lines in **Figs. 3a** and **3b** indicate possible exchanging the quantum information between adjacent qubits representing degrees of freedom of the same species, i.e., a pair of qubits q1, q2 representing the first degrees of freedom (e.g., the fermionic degrees of freedom), a pair of qubits $qb_{1,1}$; $qb_{1,2}$ that belong to a respective qubit ladder representing the second degree of freedom, and additionally in **Fig. 3b,** a pair of qubits qh1; qh2 belonging to a respective auxiliary qubit chain 15c. Dashed lines in **Figs. 3a** and **3b** between qubits indicate possible exchanging the quantum information between adjacent qubits representing different species of degrees of freedom.

**Fig. 4** shows schematically a possible topology that specifies the arrangement of qubits with a quantum exchange register 17 shown in **Figs. 2a** and **2b**. In this example the quantum exchange register 17 is a chain of six qubits qR1-qR6 that can be used to exchange the quantum information between qubit ladders belonging to two different sets of ladders, e.g., between a ladder with qubits $qb_{5,1}$, and $qb_{5,2}$ (the ladder of the lower set of qubit ladders) and a ladder with qubits $qb_{4,1}$, and $qb_{4,2}$ (the ladder of the upper set of qubit ladders). Dashed horizontal lines indicate possible exchanging the quantum information between adjacent qubits of different adjacent qubit ladders, as well as exchanging the quantum information between qubits qR2-qR5 of the quantum exchange register 17 and respective adjacent qubits $qb_{1,1}$ $qb_{1,2}$, $qb_{8,2}$, and $qb_{8,1}$ of two quantum ladders belonging to the two different sets of ladders (e.g., by using the SWAP operations). Other notations are similar to those defined in connection with **Fig. 2a** and **Fig. 3a**.

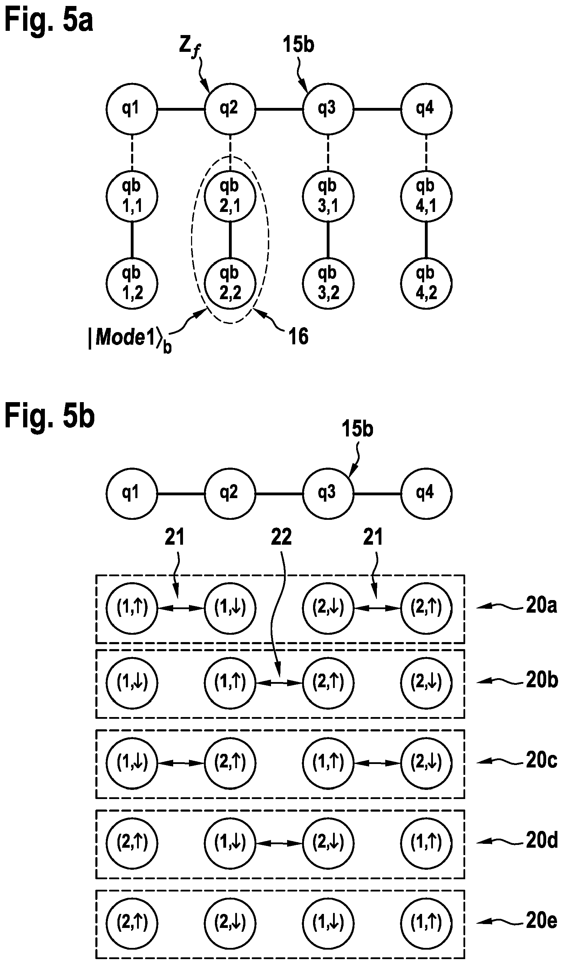

**Figs. 5a** and **5b** show an example of implementing quantum computational operations on a quantum computing system with four qubits q1 to q4 that initially encode the fermionic degrees of freedom and two qubits of the ladder 16 with qubits $qb_{2,1}$; $qb_{2,2}$ initially encoding a bosonic mode, namely: $(1,\uparrow) \rightarrow q1$, $(1,\downarrow) \rightarrow q2$, $(2,\downarrow) \rightarrow q3$, $(2,\uparrow) \rightarrow q4$ and $|Mode1\rangle_b \rightarrow qb_{2,1}qb_{2,2}$. Here (i, σ) with $i$ = 1, 2 labels an electron with spin σ =$\uparrow$, $\downarrow$ in orbital $i$ and $|Mode1\rangle_b$ denotes a quantum state of the bosonic mode. Each row in **Fig. 5b** represents an ordering of fermionic orbitals depicted in circles that are encoded on qubits q1 to q4. Back and forth arrows indicate fermionic SWAP operations (FSWAP) between adjacent orbitals in each row. Top row shows initial ordering of fermionic orbitals defined above. In each subsequent row, starting from the top row and progressing to the bottom row, the resulting new order of fermionic orbitals is displayed (see discussions below for more details). Available quantum computational operations are performed on qubits q1 to q4, $qb_{2,1}$, and $qb_{2,2}$ each time after the FSWAP operations are carried out within a respective row (not shown on **Fig. 5b).**

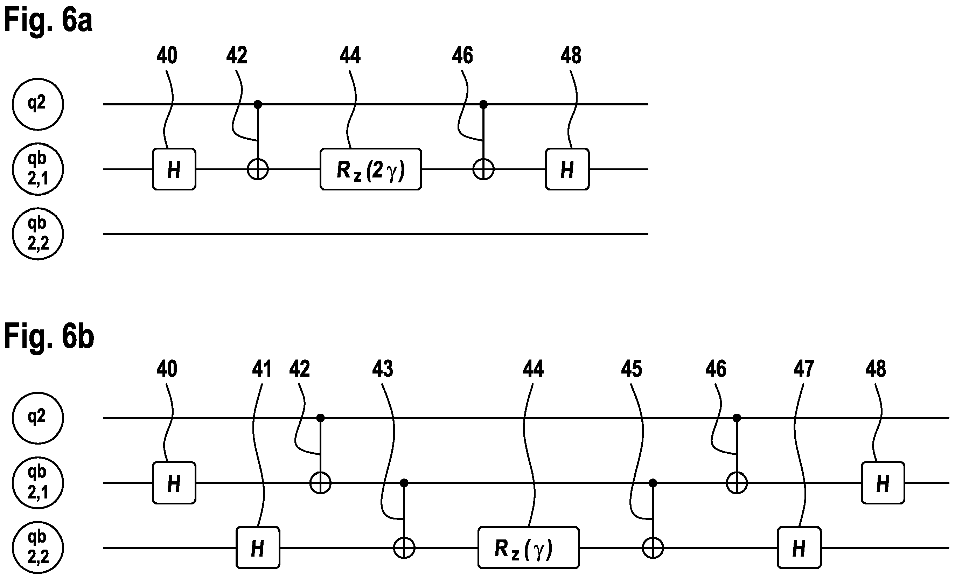

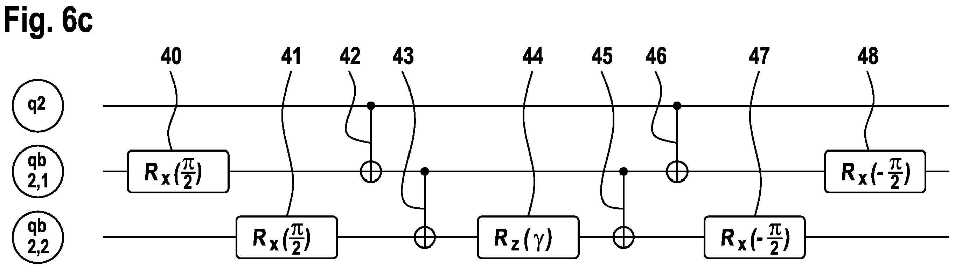

**Figs. 6a** to **6c** show three examples of quantum circuits for performing possible quantum computational operations 40-48 on the quantum computing system of **Figs. 5a** and **5b** that involve qubit q2 representing the first degree of freedom (e.g., the fermionic degree of freedom) and two qubits $qb_{2,1}$, and $qb_{2,2}$ of the qubit ladder 16 that encodes the second degree of freedom (for example, the bosonic mode). Qubits q2 and $qb_{2,1}$ are adjacent, and qubits $qb_{2,1}$, and $qb_{2,2}$ are also adjacent, see **Fig. 5a**. In these figures H denotes a Hadamard gate, reference signs 42, 43, 45 and 46 designate a sequence of controlled NOT (CNOT) operations, $R_z(2\gamma)$ and $R_z(\gamma)$ are rotation transformations around the rotation axis z by angles 2γ and γ, respectively, applied to qubit $qb_{2,1}$ of **Fig. 6a** and $qb_{2,2}$ of **Figs. 6b** and **6c**. $R_X(\pi/2)$ stands for a basis rotation transformation and $R_X(-\pi/2)$ to an inverse basis rotation transformation .

**Detailed Description**

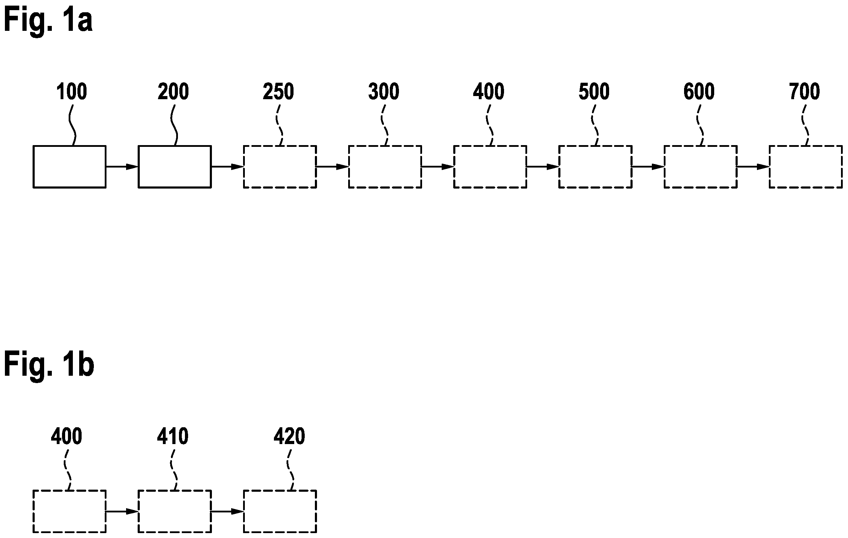

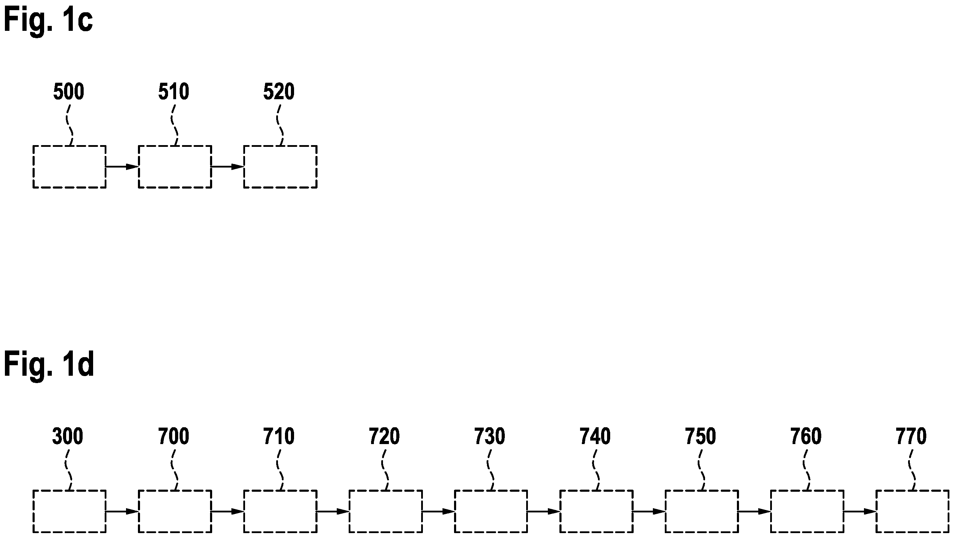

First, some general aspects related to the configuration of a quantum computing system will be discussed before some possible implementations are explained. An overview over the first general aspect of the present disclosure related to a method for configuring a quantum computing system will be given in connection with flow charts shown in **Figs. 1a-1d.** Further aspects of the method related to performing quantum computational operations on the quantum computing system will also be presented in connection with these figures. Then, exemplary topologies with arranged qubits on the quantum computing system according to the techniques of the present disclosure are discussed in connection with **Figs. 2a, 2b, 3a, 3b** and **4.** Then, an example of implementing quantum computational operations on a quantum computing system is discussed in connection with **Figs. 5a** and **5b.** Lastly, three examples of quantum circuits for performing possible quantum computational operations on the quantum computing system are presented in **Figs. 6a** to **6c.**

**Figs. 1a-1d** disclose and propose a method for configuring a quantum computing system 1000 in accordance with the first general aspect of the present disclosure. The quantum computing system of the present disclosure comprises a plurality of qubits arranged on a two-dimensional, 2D, lattice (see, e.g., **Figs. 2a, 2b, 3a, 3b** and **4,** where various embodiments of 2D lattices are schematically illustrated, and further discussions). The plurality of qubits of the first aspect are configured to perform a plurality of quantum computational operations (that, e.g., can include performing unitary transformations on respective qubits implemented as a sequence of quantum gates acting on these qubits, see discussions further above). The method steps of the corresponding independent claim are summarized inside boxes drawn by solid lines in **Figs. 1a-1d,** while the method steps of dependent claims are shown inside boxes depicted by dashed lines.

The present techniques for configuring the quantum computing system include receiving a selection 100 of a first plurality of qubits 15a-15c; 1a-1d; 3a-3c of the plurality of qubits, wherein the first plurality of qubits comprises a number of chains of qubits. Furthermore, each qubit 1a-1d of the number of chains 15a-15b of the first plurality of qubits represents a first degree of freedom related to respective constituents of a physical system to be mapped onto the number of chains of the first plurality of qubits. In some examples, and in agreement with the above discussions, one or more constituents of the physical system described by a quantum Hamiltonian $\mathcal{H}$ may be fermionic particles (e.g., fermionic orbitals), in which case the first degree of freedom may be referred to as a fermionic degree of freedom. In the examples of 2D lattices shown in **Figs. 2a** and **3a,** the number of chain of qubits representing the first degrees of freedom (e.g., the fermionic degrees of freedom) consists of four horizontal chains 15b and three vertical chains 15a (depicted as filled bars 15a, 15b in **Fig. 2a)** and are arranged in serpentines (in total, **Fig. 3a** shows twenty-one qubits q1 to q21 that represent the first degrees of freedom). In the embodiment of **Figs. 2b** and **3b,** the number of qubit chains representing the first degrees of freedom (displayed as black bars 15a, 15b in **Fig. 2b)** consists of two disconnected horizontal chains 15b and two other horizontal chains 15b connected by a vertical chain 15a (twelve qubits q1 to q12 that represent the first degrees of freedom are shown in **Fig. 3b** in total). In some examples, the number of chains of the first plurality of qubits may contain one or more, two or more, three or more, four or more, five or more, seven or more, ten or more, or fifty or more qubit chains. A chain of qubits (e.g., one or more qubit chains) of the number chains of the first plurality of qubits can comprise two or more, five or more, ten or more, twenty or more, or fifty or more qubits. In some cases, a number of qubits in the number of chains of the first plurality of qubits can be equal to a number of the fermionic degrees of freedom mapped to (or, in other words, encoded by) this number chains of qubits. In some examples, and in agreement with the discussions above, a qubit (e.g., each qubit) representing the first degrees of freedom can comprise "at least partial information" about more than one first degree of freedom because of the non-local character of the mapping of the first degrees of freedom to qubits of the number of qubit chains and the possible multiple-qubit entanglement that develops during the course of quantum computations (see also discussions further below).

In the present techniques, each qubit (q1) of the first plurality of qubits is configured to transmit a quantum information of said qubit to another qubit (q2) of the first plurality of qubits that is adjacent to said qubit. Furthermore, the other qubit of the first plurality of qubits is configured to receive the quantum information of said qubit of the first plurality of qubits. Possible adjacent qubits of the number of chains of the first plurality of qubits are designated by solid vertical and horizontal lines in **Fig. 3a** and **3b.** As is seen from **Figs. 3a** and **3b,** the qubit q1 of the upper chain of the first plurality of qubits is the nearest-neighbor with respect to the qubit q2 of this chain, such that the qubit q2 can be classified as a qubit being adjacent with respect to the qubit q1 according to the definitions further above. For the same reason, the qubit q3 of **Fig. 3a** and **3b** can be considered to be adjacent to the qubit q2 and so on. Thus, the qubit q1 can be configured to transmit the quantum information carried by it to the qubit q2 (e.g., using a fermionic SWAP operation, see further discussions), and vice versa, the qubit q2 can be configured to transmit the quantum information it carries to the qubit q1. Similarly, the qubit q2 can be configured to transmit the quantum information carried by it to the qubit q3, and vice versa, the qubit q3 can be configured to transmit the quantum information it carries to the qubit q2. Moreover, the qubit q2 can be configured to receive the quantum information carried by the qubit q1, and vice versa, the qubit q1 can be configured to receive the quantum information carried by the qubit q2. In an example, the qubit q3 can be configured to receive the quantum information carried by the qubit q2, and vice versa, the qubit q2 can be configured to receive the quantum information carried by the qubit q3. Similar considerations may also apply to other qubits of the number of chains of the first plurality of qubits shown in **Fig. 3a** (qubits q4 to q21) and **Fig. 3b** (qubits q4 to q12).

The next step of the present techniques includes receiving a selection 200 of a second plurality of qubits 16; 16a-16e; 2a-2d of the plurality of qubits, wherein the second plurality of qubits comprises a number of ladders of qubits. Here, each ladder of qubits represents a second degree of freedom related to respective constituents of the physical system to be mapped onto the number of ladders of the second plurality of qubits. (As mentioned above, "a qubit ladder" will be used interchangeably with "a ladder of qubits", which has the same meaning.) The second degree of freedom of the first aspect is different from the first degree of freedom. In some examples, and in agreement with the above discussions, one or more constituents of the physical system described by a quantum Hamiltonian $\mathcal{H}$ may be bosonic modes, in which case the second degree of freedom may be referred to as a bosonic mode. In the embodiments of 2D lattices shown in **Figs. 3a** and **3b,** each qubit ladder consists of two qubits that are enclosed in a respective dashed ellipse. There are twelve qubit ladders shown in the embodiments of **Figs. 3a** and **3b** (e.g., the left upper ladder of qubits has qubits $qb_{1,1}$ and $qb_{1,2}$, while the lower right qubit ladder has qubits $qb_{12,1}$ and $qb_{12,2}$). As is also seen from these figures, the qubits within each ladder extend in the vertical direction, while sets of qubit ladders extend in the horizontal direction. In the embodiments of **Figs. 3a** and **3b,** three sets of ladders each consisting of four ladders are shown, e.g., the upper set of ladders has four ladders with qubits $qb_{1,1}$, $qb_{1,2}$, $qb_{2,1}$, $qb_{2,2}$, $qb_{3,1}$, $qb_{3,2}$, $qb_{4,1}$, $qb_{4,2}$ (the first subscript enumerates a ladder, while the second subscript corresponds to a qubit number within the ladder). In **Figs. 2a** and **2b** the number of ladders of the second plurality of qubits are displayed as four filled bars 16 extending in the horizontal direction. Each horizontal bar 16 in these figures is thicker than the bars depicting the chains 15a, 15b of the first plurality of qubits to schematically illustrate that the qubit ladders extending in the vertical direction may comprise more than one qubit. In some cases, a qubit (e.g., each qubit) of the ladder (e.g., each ladder) representing the second degrees of freedom can comprise "at least partial information" about one or more of second degrees of freedom because of the non-local character of the mapping of the second degrees of freedom to qubits of the qubit ladder and the possible multiple-qubit entanglement that develops during the course of quantum computations (see discussions above and further below).

In some examples, the number of ladders of qubits representing the second degrees of freedom may contain one or more, two or more, five or more, ten or more, fifty or more, or hundred or more qubit ladders. A qubit ladder (e.g., one or more qubit ladders) of the number chains can comprise two or more, five or more, ten or more, twenty or more, or fifty or more qubits. In some cases, a number of ladders of the second plurality of qubits can be equal to a number of bosonic modes mapped to (or, in other words, encoded by) this number of qubit ladders. In some embodiments, like in those shown in **Figs. 2b** and **3b,** the number of qubits within the number of chains 15a; 15b that represent the first degrees of freedom can be equal to the number of ladders of qubits representing the second degrees of freedom. In the embodiment of **Fig. 3b,** there are twelve qubit ladders 16, which may represent, e.g., twelve bosonic modes, and twelve qubits q1 to q12 within three chains of the first plurality of qubits, which may represent, e.g., twelve fermionic degrees of freedom. In other embodiments, as in **Figs. 2a** and **3a,** the number of qubits within the number of chains 15a; 15b that represent the first degrees of freedom can be larger than the number of ladders of qubits representing the second degrees of freedom. Similar to the embodiment of **Fig. 3b,** there are twelve qubit ladders 16 in the embodiment of **Fig. 3a,** which may represent, e.g., twelve bosonic modes. On the other hand, in the 2D lattice of **Fig. 3a,** there are twenty-one qubits q1 to q21 within six chains of the first plurality of qubits, which may represent, for example, twenty-one fermionic degrees of freedom. In still other embodiments, the number of qubits within the number of chains that represent the first degrees of freedom can be smaller than the number of ladders of qubits representing the second degrees of freedom (not shown in the figures). In some cases, a total number of qubits within the number of chains of the first plurality of qubits ), M, can be less than a total number of qubits within the number of ladders of the second plurality of qubits $N, M < N$. For example, a corresponding ratio $M/N$ may be a value of 9/10 or less, ½ or less, ¼ or less, 1/10 or less.

In the techniques of the present disclosure, each qubit 2a; 2c of the second plurality of qubits is configured to transmit the quantum information of said qubit to another qubit 2b; 2d of the second plurality of qubits that is adjacent to said qubit. Furthermore, the other qubit of the second plurality of qubits is configured to receive the quantum information of said qubit of the second plurality of qubits. Possible adjacent qubits of the second plurality of qubits are designated by solid lines in **Fig. 3a** and **3b.** In some cases, like in those shown in these figures, only qubits within the same ladder may be considered to be adjacent to each other. In the embodiments of **Figs. 3a** and **3b,** the qubit $qb_{1,1}$ of the left upper qubit ladder is the nearest-neighbour with respect to the qubit $qb_{1,2}$ of the same ladder, such that the qubit $qb_{1,2}$ can be classified as a qubit being adjacent with respect to the qubit $qb_{1,1}$ according to the definitions further above. Thus, the qubit $qb_{1,1}$ can be configured to transmit the quantum information carried by it to the qubit $qb_{1,2}$ (e.g., using a SWAP operation, see further discussions), and vice versa, the qubit $qb_{1,2}$ can be configured to transmit the quantum information it carries to the qubit $qb_{1,1}$. Moreover, the qubit $qb_{1,2}$ can be configured to receive the quantum information carried by the qubit $qb_{1,1}$, and vice versa, the qubit $qb_{1,1}$ can be configured to receive the quantum information carried by the qubit $qb_{1,2}$. Similar considerations hold true to qubits of the other eleven ladders presented in **Figs. 3a** and **3b.** In other cases, as in the embodiment shown in **Fig. 4,** the qubits of different ladders may be adjacent to each other (this possible adjacency between qubits of neighboring qubit ladders is shown by dashed horizontal lines in **Fig. 4).**

In the first aspect, one or more qubits 1a; 1c of the number of chains of the first plurality of qubits are adjacent to respective one or more qubits 2a; 2c of the number of ladders of the second plurality of qubits. Furthermore, the one or more qubits of the number of chains of the first plurality of qubits can be configured to transmit the quantum information to the respective one or more qubits of the number of ladders of the second plurality of qubits. In addition or alternatively, the one or more qubits of the number of chains of the first plurality of qubits can be configured to receive the quantum information from the respective one or more qubits of the number of ladders of the second plurality of qubits. In the examples of **Figs. 3a** and **3b,** possible adjacent qubits of the number of chains of the first plurality of qubits and of the number of ladders of the second plurality of qubits are designated by dashed vertical lines. For example, the qubit q2 of the upper chain of the first plurality of qubits is the nearest-neighbour with respect to the qubit $qb_{2,1}$ of the upper ladder of qubits, such that the qubit $qb_{2,1}$ can be classified as a qubit being adjacent with respect to the qubit q2. Thus, the qubit q2 can be configured to transmit the quantum information carried by it to the qubit $qb_{2,1}$ (for example, by means of one or more of the quantum circuits disclosed in connection with **Figs. 5a** to **5c,** see discussions below). In addition or alternatively, the qubit q2 can be configured to receive the quantum information carried by the qubit $qb_{2,1}$. In some cases, the respective one or more qubits 2a; 2c of the number of ladders of the second plurality of qubits adjacent to the one or more qubits 1a; 1c of the number of chains of the first plurality of qubits are configured to receive the quantum information from and/or transmit the quantum information to the one or more qubits 1a; 1c of the number of chains of the first plurality of qubits. Returning to the example of qubits q2 and $qb_{2,1}$: The qubit $qb_{2,1}$ of the upper ladder of qubits can be configured to transmit the quantum information carried by it to the qubit q2. In addition or alternatively, the qubit $qb_{2,1}$ can be configured to transmit the quantum information carried by it to the qubit $qb_{2,1}$. Similar considerations are also valid for qubits of the other eleven ladders presented in **Figs. 3a** and **3b** that are adjacent to respective qubits of the chains of the first plurality of qubits (e.g., for q1 and $qb_{1,1}$, for q3 and $qb_{3,1}$ and other pairs of qubits).

In the techniques of the present disclosure, and in accordance with the definitions further above, the number of chains of the first plurality of qubits and the number of ladders of the second plurality of qubits are configured to perform a plurality of quantum computational operations (see examples and embodiments disclosed further below for details). In other words, a portion or all qubits from the number of chains of the first plurality of qubits and from the number of ladders of the second plurality of qubits may be involved in performing quantum computational operations.

In the above discussions related to the embodiments of **Figs. 3a** and **3b,** nearest-neighbor qubits within the same or different species of qubits were referred to as adjacent qubits, which is one possible example when a pair of qubits can be classified as adjacent (the fact that a pair of qubits is adjacent is indicated by a respective solid or dashed line in these figures). In other cases, other criteria can be used to determine whether or not a pair of qubits (within the same or different species of qubits) is adjacent. As mentioned above, a decisive factor for classifying two qubits to be adjacent is a possibility to realize universal quantum gates acting on these two qubits without the need to involve a third qubit for this purpose. For example, one qubit from the plurality of qubits on the 2D lattice can be considered to be adjacent to another qubit from the plurality of qubits if a distance from said one qubit to the other qubit is equal to or less than a predetermined characteristic distance, so that the aforementioned universal gates can be realized based solely on these two qubits. In some examples, the predetermined characteristic distance may be proportional to an average distance between qubits of the plurality of qubits arranged on the 2D lattice (e.g., between the first and second pluralities of qubits introduced above). In some cases, the proportionality coefficient between these quantities may be chosen to be 0.5 or less, 0.9 or less, 1.2 or less, 1.5 or less). In some cases, the predetermined characteristic distance can be equal to the average distance between qubits of the plurality of qubits. These two alternatives may be preferred, for example, for the case where the 2D lattice comprises square cells. In still other examples, when an average distance between qubits of the first plurality of qubits is different from an average distance between qubits of the second plurality of qubits, a number of the predetermined characteristic distances can be taken to identify adjacent qubits. For example, the predetermined characteristic distances may be proportional or equal to respective average distances between qubits within the same or different pluralities of qubits. In some cases, values of the proportionality coefficient may be chosen similarly to the case of a single predetermined characteristic distance.

In other cases, and in accordance with the definitions above, a spatial distance between qubits may be not the only relevant factor to classify a pair of qubit as adjacent. For example, the qubit-qubit coupling can be increased (e.g., via magnetic flux control or additional electrical circuit in the context of superconducting qubits), so that two qubits may be considered to be adjacent to each other in some examples despite their spatial separation. In other words, the indication of the adjacency between each pair of qubits by a respective solid or dashed line in **Figs. 3a** and **3b** serves to illustrate the fact that a pair of qubits under consideration is adjacent, without specifying which of the factors among those listed above is decisive for said adjacency (e.g., a distance between qubits q1 and q2 of the upper chain of the first plurality of qubits may be different from a distance between qubits q2 and q3 of the same chain, but both pairs can still be classified as adjacent pairs because the other aforementioned factors come into play).

In the present techniques, a qubit ladder 16 (e.g., each qubit ladder) of the number of ladders of the second plurality of qubits can comprise a plurality of qubits, wherein the plurality of qubits within the ladder extends in a first direction (for example, in the vertical direction shown in **Figs. 3a, 3b, 4** and **5a).** In the first aspect of the present specification, each chain of the number of chains of the first plurality of qubits can extend in the first direction 15a (for example, in the vertical direction shown in **Figs. 3a** and **3b)** or in a second direction 15b different from the first direction (for example, in the horizontal direction shown in **Figs. 3a** and **3b).** It should be noted that the extension of the number of ladders, the plurality of qubits within the qubit ladder (e.g., each qubit ladder), and of the number of chains of the first plurality of qubits should be broadly construed in the present disclosure: In some examples, a shape of a qubit chain, a qubit ladder or qubits within the qubit ladder may form a one-dimensional, 1D, curve on a plane of the 2D lattice that extends in the respective direction. In some examples, this consideration may apply to one or more (e.g., all) qubit chains, qubit ladders and qubits within the qubit ladders.

In some cases, the number of ladders of the second plurality of qubits can comprise one set of qubit ladders 16a-16d that extends in the second direction. In some cases, the one set of qubit ladders can be aligned in a straight line in the second direction. This case is illustrated in **Fig. 5a,** where a set of four ladders (each consisting of two qubits) aligned in a straight line in the horizontal direction is shown. In other examples, the number of ladders of the second plurality of qubits can comprise two or more disconnected sets of qubit ladders that extend in the second direction. In some cases, each set of the two or more disconnected sets of qubit ladders can be aligned in a respective straight line in the second direction. For example, three disconnected sets of qubit ladders (each consisting of two qubits) are aligned in straight lines in the horizontal direction in the embodiments of **Figs. 3a** and **3b.** In some cases, two sets of qubit ladders can be classified as disconnected with each other, if there is no adjacent pair of qubits (in the sense defined above) belonging to two qubit ladders from different sets of qubit ladders. For example, two upper sets of qubit ladders depicted in **Fig. 3a** can be classified as disconnected sets of qubit ladders, since none of the pairs of qubits ($qb_{1,2}$, $qb_{8,2}$), ($qb_{2,2}$, $qb_{7,2}$), ($qb_{3,2}$, $qb_{6,2}$) and ($qb_{4,2}$, $qb_{5,2}$) are adjacent qubits. In other cases, the number of ladders of the second plurality of qubits can comprise two or more connected sets of qubit ladders that extend in the second direction (not shown in the figures). It should be noted that two sets of qubit ladders can be classified as connected with each other, when, e.g., at least a single pair of adjacent qubits belonging to two qubit ladders from different sets of qubit ladders can be found.

In some cases of the first aspect, like in those shown in the embodiments of **Figs. 3a** and **3b,** qubit ladders within a set of qubit ladders (e.g., each individual set of qubit ladders) can be disconnected with each other. In this case, no adjacent qubits can be found that reside different qubit ladders, i.e., pairs of qubits within each individual ladder may be classified as adjacent qubits only. For example, four pairs of adjacent qubits $(qb_{1,1}, qb_{1,2})$, $(qb_{2,1}, qb_{2,2})$, $(qb_{3,1}, qb_{3,2})$ and $(qb_{4,1}, qb_{4,2})$ form four disconnected ladders of the upper set of ladders shown in **Fig. 3a.** In other cases of the first aspect, as shown in the embodiment of **Fig. 4,** one or more pairs of adjacent qubit ladders within a set of qubit ladders (e.g., each individual set of qubit ladders) can be connected with each other. In this case, at least a single pair of adjacent qubits belonging to a pair of adjacent qubit ladders within the same set of qubit ladders can be found. In the embodiment of **Fig. 4,** $(qb_{1,1}, qb_{2,1})$, $(qb_{2,1}, qb_{3,1})$, $(qb_{3,1}, qb_{4,1})$, $(qb_{1,2}, qb_{2,2})$, $(qb_{2,2}, qb_{3,2})$ and $(qb_{3,2}, qb_{4,2})$ are six adjacent pairs of qubits that belong to a respective pair of adjacent qubit ladders.

In some cases of the first aspect, the number of chains of the first plurality of qubits (representing the first degrees of freedom) can comprise multiple connected chains of qubits, wherein each chain of the multiple connected chains of qubits extends in one of the first and second directions. Furthermore, one or more chains from the multiple connected chains of the number of chains of the first plurality of qubits extending in the second direction (e.g., in the horizontal direction) can be connected to a corresponding chain from the multiple connected chains of qubits extending in the first direction (e.g., in the vertical direction). In the present techniques, each chain of the multiple connected chains of the first plurality of qubits can be aligned in a respective straight line in one of the first and second directions. In the embodiment of **Fig. 2a,** four chains 15b of the first plurality of qubits are aligned in straight lines in the horizontal direction and are connected by three chains 15a of the first plurality of qubits that are aligned in straight lines in the vertical direction. In **Fig. 3a,** which specifies the upper part of **Fig. 2a,** three chains 15b of the first plurality of qubits are aligned in straight lines in the horizontal direction and are connected to two qubit chains 15a of the first plurality of qubits aligned in straight line in the vertical direction. In the first aspect, the multiple connected chains can be arranged in serpentines extending in the first direction being at least partially adjacent to the number of ladders of the second plurality of qubits (for instance, such a serpentine of qubit chains that extends in the vertical direction and is adjacent in its horizontal portions to the qubit ladders 16 is shown in **Figs. 2a** and **3a).** In some cases, a plurality of chains from the multiple connected chains of the first plurality of qubits aligned in the second direction can be interrupted in every first or second chain by two corresponding sets of qubit ladders from the two or more disconnected sets of qubit ladders of the second plurality of qubits (see, e.g., **Fig. 2a,** where the lowest qubit chains 15b of the serpentine is interrupted by two sets of qubit ladders 16 and two subsequent horizontal qubit chains 15b of the serpentine are interrupted by two subsequent sets of qubit ladders 16). In one specific case, one or more chains of the multiple connected chains aligned in the respective straight line in the second direction (e.g., in the horizontal direction) can be adjacent to respective one or more ladders from the number of ladders of the second plurality of qubits (e.g., the upper qubit chain with qubits q1, q2, q3 and q4 aligned in the horizontal line in the embodiment of **Fig. 3a** is adjacent to four qubit ladders with qubits ($qb_{1,2}$, $qb_{i,2}$), where index i enumerates the ladders and runs from 1 to 4).

In an alternative embodiment of the first aspect, the number of chains of the first plurality of qubits (representing the first degrees of freedom) can comprise a number of disconnected qubit chains aligned in a respective straight line in the second direction (e.g., in the horizontal direction) and/or one or more pairs of chains aligned in a respective straight line in the second direction. Furthermore, two chains within the pair of chains can be connected to each other by a respective chain that extends in the first direction (e.g., in the vertical direction). In the present techniques, two chains within the pair of chains can be connected to each other by a respective chain that extends in the first direction. In some examples, the pair of chains can be disconnected with subsequent one or more chains of the number of chains of the first plurality of qubits. In the embodiment of **Fig. 2b,** four chains 15b of the first plurality of qubits are aligned in straight lines in the horizontal direction. Two of them form a pair of qubit chains 15b that is connected by a chain 15a of the first plurality of qubits aligned in a straight line in the vertical direction. This pair of chain is disconnected from the other two qubit chains 15b (upper and low qubit chains 15b of **Fig. 2b).** In **Fig. 3b,** which specifies the upper part of **Fig. 2b,** three chains 15b of the first plurality of qubits are aligned in straight lines in the horizontal direction. Two of them form a pair of qubit chains 15b that is connected by a chain 15a of the first plurality of qubits aligned in a straight line in the vertical direction. This pair of chain is disconnected from the third (upper) qubit chain 15b of the first plurality of qubits shown in **Fig. 3b.** In some cases, each chain of the number of disconnected qubit chains or each chain of the one or more pairs of chains can be at least partially adjacent to respective one or more ladders from the number of ladders of the second plurality of qubits. For instance, each of the four qubit chains of the first plurality of qubits aligned in straight lines in the horizontal direction is adjacent to qubit ladders in **Fig. 2b.** In the embodiment of **Fig. 3b,** each of the three qubit chains of the first plurality of qubits aligned in straight lines in the horizontal direction is adjacent to respective four ladders of the second plurality of qubits.

In this alternative embodiment of the first aspect, the first plurality of qubits can further comprise one or more auxiliary chains of qubits 15c; 3a-3c configured to exchange the quantum information between subsequent disconnected chains of the first plurality of qubits (e.g., using a sequence of SWAP operations, see discussions below). It should be noted that these auxiliary chains of qubits do not represent the first or second degrees of freedom. The embodiment of **Fig. 3b** exemplifies two auxiliary chains of qubits containing qubits qh1 to qh6 in the upper auxiliary chain and qubits qh7 to qh9 in the lower auxiliary chain. (The qubits of the auxiliary chain may be referred to as auxiliary qubits.) In some cases, each chain of the one or more auxiliary chains 15c of the first plurality of qubits can comprise a first qubit 3a; qh1 and a second qubit 3b; qh6, wherein the first qubit 3a; qh1 is adjacent to a qubit q4 of a respective chain 15b from the number of disconnected chains or the one or more pairs of chain (this adjacency is illustrated by a dashed line between qubits qh1 and q4 and by another dashed line between qubits qh7 and q12 in **Fig. 3b).**

Furthermore, the second qubit 3b; qh6 is adjacent to a qubit q5 of another chain from the number of disconnected chains or the one or more pairs of chains that is subsequent with respect to the respective chain, wherein the respective chain and the subsequent chain are disconnected from each other (this adjacency is illustrated by a dashed line between qubits qh6 and q5 in **Fig. 3b).** In this embodiment of the first aspect, the first qubit 3a; qh1 adjacent to the qubit of the respective chain can be configured to receive the quantum information from and/or transmit the quantum information to the qubit q4 of the respective chain from the number of disconnected chains or the one or more pairs of chains. In addition, the second qubit 3b; qh6 adjacent to the qubit q5 of the other chain that is subsequent with respect to the respective chain can be configured to receive the quantum information from and/or transmit the quantum information to the qubit of the other chain from the number of disconnected chains or the one or more pairs of chains. In some cases, in turn, the qubit q4 of the respective chain from the number of disconnected chains or the one or more pairs of chains adjacent to the first qubit 3a; qh1 can be configured to transmit the quantum information to and/or receive the quantum information from the first qubit 3a; qh1. Moreover, the qubit q5 of the other chain that is subsequent with respect to the respective chain can be configured to transmit the quantum information to and/or receive the quantum information from the second qubit 3b; qh6.

In the embodiments shown in **Figs. 2b** and **3b,** the auxiliary chains of qubits 15c; 3a-3c extends in the first direction (i.e., they are aligned in straight lines in the vertical direction in this example). In addition or alternatively, one or more chains from the one or more auxiliary chains of qubits 15c; 3a-3c can extend in the second direction (e.g., they can be aligned in straight lines in the horizontal direction). This may be the case, for example, when one or more qubits from the qubit chains 15b representing the first degrees of freedom, which are shown in **Figs. 2b** and **3b,** are replaced by corresponding auxiliary qubits. Returning to the embodiment displayed in **Fig. 3b:** If the qubit q4 of the upper horizontal chain is replaced by an auxiliary qubit qh10 and/or qubit q5 of the other horizontal chain is replaced by an auxiliary qubit qh11 (not shown in the figures), then the auxiliary chains of qubits 15c; 3a-3c may extend in both the first and second directions. In this situation, the number of qubit ladders representing the second degrees of freedom (e.g., bosonic modes) can be larger than the number of qubits within the number of chains 15a; 15b that represent the first degrees of freedom (e.g., fermionic degrees of freedom).

The method of the first aspect can further comprise receiving a selection of a third plurality of qubits 17; 4a-4b of the plurality of qubits. In some cases, a number of qubits of the third plurality of qubits (qR2-qR5) can be adjacent to two or more ladders 16e; 16a of the number of ladders of the second plurality of qubits and be configured to receive the quantum information from and/or transmit the quantum information to the two or more ladders from the number of ladders of the second plurality of qubits. The two or more ladders 16e; 16a from the number of ladders of the second plurality of qubits adjacent to the number of qubits (qR2-qR5) of the third plurality of qubits can be configured to transmit the quantum information to and/or receive the quantum information from the number of qubits (qR2-qR5) of the third plurality of qubits. The third plurality of qubits of the present specification can comprise one or more chains of qubits that extend in the first direction (e.g., in the vertical direction). This situation is illustrated in the embodiments of **Figs. 2a** and **2b,** where the third plurality of qubits, also referred to as a quantum exchange register 17, is represented in these figures by a vertical filled bar. **Fig. 4** demonstrates schematically the arrangement of qubits with the quantum exchange register 17 shown in **Figs. 2a** and **2b** in further details. Four out of six qubits of the quantum register 17 in **Fig. 4,** namely qubits qR2, qR3, qR4 and qR5, are adjacent to, respectively, qubits $qb_{1,1}$, $qb_{1,2}$, $qb_{8,2}$ and $qb_{8,1}$ of the two qubit ladders and are configured in accordance with the above definitions. In one non-limiting example of **Fig. 4,** the third plurality of qubits is shown as a single chain extended in the vertical direction. In other examples, the third plurality of qubits can comprise two or more qubit chains, three or more qubit chains, five or more qubit chains, or ten or more qubit chains: In some cases, a number or all of said qubit chains can extend in the first direction (not shown in the figures).

In the techniques of the present disclosure, a qubit ladder 16 (e.g., each qubit ladder) of the number of ladders of the second plurality of qubits can comprise a single qubit adjacent to a qubit of a respective chain 15b of the first plurality of qubits, wherein said single qubit is spaced apart from the qubit of the respective chain by a first predetermined distance. For example, qubits $qb_{1,1}$, $qb_{2,1}$, $qb_{3,1}$ and $qb_{4,1}$ of four ladders of the upper set of ladders shown in **Fig. 3a** are adjacent to, respectively, qubits q1, q2, q3 and q4 being spaced apart from them in a non-limiting example by the same first predetermined distance. Thus, among each of these four qubit pairs from two different qubit species, universal quantum gates acting on the two qubits of any of these pairs may be realized without the need to involve a third qubit, as elucidated in detail further above. In some cases, when a spatial separation is a decisive factor to classify a pair of qubits as adjacent, the first predetermined distance is smaller than a threshold value. The threshold value can be defined as a threshold separation distance between qubits above which two qubits become non-adjacent.

In some possible topologies of the present disclosure, spatial qubit arrangements and relative distances between the same and/or difference species of qubits may be defined similar to those shown in the embodiment of **Figs. 2a** and **3a.** In some cases, a pair of subsequent chains from the multiple connected chains of the first plurality of qubits can be separated by a second predetermined distance if said pair of chains is uninterrupted, e.g., the second predetermined distance shown in **Fig. 3a** may be a distance between any one of a pair of qubits (q13, q16), (q12, q17) and (q11, q18), which can be the same in some embodiments. Otherwise, when the pair of subsequent chains is interrupted, said pair of subsequent chains can separated by a third predetermined distance: For example, the third predetermined distance can be a distance between any one of pairs of qubits (q1, q14), (q3, q12) or (q5, q10), which can be the same in some embodiments. In the first aspect, the qubit ladder (e.g. each qubit ladder) of the number of ladders of the second plurality of qubits can have a predetermined length. In some cases, a pair of subsequent sets of ladders can be separated by a fourth predetermined distance if said pair of sets is uninterrupted, e.g., the fourth predetermined distance shown in **Fig. 3a** may be a distance between any one of a pair of qubits $(qb_{1,2}\ qb_{8,2})$, $(qb_{2,2}, qb_{7,2})$ and $(qb_{4,2}, qb_{5,2})$, which can be the same in some embodiments. Otherwise, when the pair of subsequent sets is interrupted, said pair of subsequent sets can be separated by a fifth predetermined distance: For example, the fifth predetermined distance can be a distance between any one of pair of qubits $(qb_{8,1}, qb_{9,1})$, $(qb_{7,1}\ qb_{10,1})$ and $(qb_{5,1}, qb_{12,1})$, which can be the same in some embodiments. In some specific examples, the first, second and fourth predetermined distances may be equal. In addition, the predetermined length of the qubit ladder can be equal to a product of the first predetermined distance and a value obtained by subtracting a number of qubits in the plurality of qubits in the qubit ladder and unity. In some specific cases, the third predetermined distance may be equal to twice the sum of the predetermined length and the first predetermined distance plus the fourth predetermined distance. Furthermore, in an example, the fifth predetermined distance may be equal to a sum of the second predetermined distance and twice the first predetermined distance.

In one example of the present techniques, the 2D lattice can be a rectangular lattice. In other examples, the 2D lattice can be a square lattice. In still other examples, 2D lattice can have any other 2D shape (e.g., polyform, tetragon, pentagon, hexagon, parallelogram, circle or triangle). In some examples, multiple qubits from the plurality of qubits arranged in the 2D lattice can be equally spaced. For example, all qubits from one or more of the first, second and third pluralities of qubits can be equally spaced. In some cases, all qubits in the 2D lattice can be equally spaced. Furthermore, in some cases, the 2D lattice (e.g., the rectangular or square lattice) can comprise a plurality of square cells with four qubits at the vertices of a square cell, wherein each qubit from said four qubits is a qubit from one of the first, second and third pluralities of qubits. In the qubit topology of **Fig. 3a, 3b** and **4** there are square cells with various combinations of qubits that belong to one or more of (i) qubit chains of the first plurality of qubits, (ii) qubit ladders of the second plurality of qubits, and (iii) qubit chains of the third plurality of qubits (i.e., qubits from the quantum exchange register). For example, one square cell can comprise only qubits of the same species (i), (ii) or (iii), while the other may comprise qubits of two or all of the listed species. In an alternative topology (not shown in the figures), 2D lattice can comprise a plurality of square cells rotated by 45° with respect to those shown in **Fig. 3a** around the axis perpendicular to a sheet surface of this figure (see, e.g., Fig. 1a in https://doi.org/10.1038/s41586-019-1666-5 for more details). In addition or alternatively, the 2D lattice can comprise a plurality of quadrilateral (e.g., rectangular) cells with four qubits at the vertices of a quadrilateral (e.g., rectangular) cell, wherein each qubit from said four qubits is a qubit from one or more of the first, second and third pluralities of qubits. In addition or alternatively, the 2D lattice can comprise a plurality of triangular cells with three qubits at the vertices of a triangular cell, wherein each qubit from said three qubits is a qubit from one or more of the first, second and third pluralities of qubits.

In the present techniques, the first plurality of qubits, the second and third pluralities of qubits can be selected on a design phase of the quantum computing system. In addition or alternatively, the first plurality of qubits, the second and third pluralities of qubits can be selected, for example, automatically (e.g., by a program/algorithm depending on a computational task to be performed). In other examples, the first plurality of qubits, the second and third pluralities of qubits can be selected by a user (e.g., via a suitable user interface). In the techniques of the present disclosure, the receiving selection steps 100, 200, 250 of the first one or more qubits, and the second and third pluralities of qubits are not particularly limited and in some cases qubits may be redistributed among these three pluralities of qubits (e.g., by a user or automatically as mentioned above): For example, for one quantum computational task (see discussions below for more details), a number of qubits from the plurality of qubits of the quantum computing system can be selected as members of the first plurality of qubits, while for another quantum computational task, one or more qubits (e.g., all qubits) from said number of qubits may be selected to belong to the second and/or third plurality of qubits (for example, to carry out quantum computational tasks more efficiently). In other examples, similar considerations apply to a number of qubits from the second and/or third plurality of qubits.

The next step of the method can include performing 300 a plurality of quantum computational operations on the quantum computing system, after carrying out the receiving selection steps (related to configuring the quantum computing system). In the present techniques, performing 300 the plurality of quantum computational operations on the quantum computing system can include performing 400 a plurality of quantum computational operations on the number of chains 15a-15b of the first plurality of qubits. Possible non-limiting arrangements of the number of chains of the first plurality of qubits representing the first degrees of freedom were discussed further above in connection with **Figs. 2a, 2b, 3a, 3b** and **4,** see, e.g., twenty-one qubits q1 to q21 within six chains 15a, 15b of the first plurality of qubits in **Fig. 3a** and twelve qubits q1 to q12 within four chains 15a, 15b in **Fig. 3b.** In the first aspect, performing the plurality of quantum computational operations on the number of chains of the first plurality of qubits can comprise exchanging the quantum information between two qubits (q1, q2) from one or more pairs (q1, q2; q2, q3) of adjacent qubits of the number of chains 15a-15b of the first plurality of qubits (e.g., by applying a respective unitary transformation to said qubits implemented as one or more quantum gates in accordance with the definitions further above). For example, qubits q1 and q2 from the upper chain of the first plurality qubits depicted in **Figs. 3a** and **3b,** which may be adjacent according to any one of the criteria discussed above, can exchange the quantum information with each other (e.g., using the fermionic SWAP operation discussed below). In some cases, any other one or more pairs of adjacent qubits of the number of chains of the first plurality of qubits, for instance, q2 and q3, q3 and q4, q10 and q11, and other pairs of adjacent qubits of the number of chains shown in these figures, can exchange the quantum information between each other in a similar manner as said qubits q1 and q2.

The techniques of the present disclosure can include performing 500 a plurality of quantum computational operations on the number of ladders 16; 16a-16e of the second plurality of qubits. Possible non-limiting arrangements of the number of ladders 16; 16a-16e of the second plurality of qubits were discussed further above in connection with **Figs. 2a, 2b, 3a, 3b** and **4,** see, e.g., three sets of qubit ladders extending in the horizontal direction in **Figs. 3a** and **3b,** wherein each set of qubit ladders consists of four ladders with qubits $qb_{i,1}$, $qb_{i,2}$ (each ladder extends in the vertical direction), where the subscript i runs from 1 to 12. In the first aspect, performing the plurality of quantum computational operations on the number of ladders of the second plurality of qubits can comprise exchanging the quantum information between two qubits ($qb_{2,1}$, $qb_{2,2}$) from one or more pairs of adjacent qubits of each ladder 16; 16a-16e from the number of ladders of the second plurality of qubits. For example, qubits $qb_{1,1}$ and $qb_{1,2}$ of the upper left qubit ladder of the second plurality of qubits shown in **Figs. 3a** and **3b,** which may be adjacent according to any one of the criteria discussed above, can exchange the quantum information with each other (e.g., using one or more controlled NOT (CNOT) operations and/or rotation transformations similar to those disclosed further below in connection with the embodiments of **Figs. 6a** to **6c).** In some cases, adjacent qubits within any other one or more qubit ladders of the number of ladders of the second plurality of qubits, namely $qb_{i,1}$, $qb_{i,2}$ (with i running from 2 to 12) shown in these figures, can exchange the quantum information between each other in a similar manner as said qubits $qb_{1,1}$ and $qb_{1,2}$ of the upper left ladder.

The present techniques can further comprise exchanging 600 the quantum information between two qubits from one or more pairs of adjacent qubits 1a, 2a; 1c, 2c, wherein one qubit 1a; 1c of the pair is from the number of chains of the first plurality of qubits and another qubit 2a; 2c of the pair is from a respective ladder of the number of ladders of the second plurality of qubits that is adjacent to said qubit from the number of chains. Returning to the embodiments displayed in **Figs. 3a** and **3b:** The qubit q1 from the upper chain of the first plurality qubits and the qubit $qb_{1,1}$ of the upper left qubit ladder of the second plurality of qubits depicted in **Figs. 3a** and **3b** can exchange the quantum information with each other (e.g., using one or more controlled NOT (CNOT) operations and/or rotation transformations as disclosed further below in connection with the embodiments of **Figs. 6a** to **6c).** In some cases, one or more other pairs of adjacent qubits belonging to different species of qubits as defined above (i.e., one qubit is from a chain of the first plurality qubits, while another qubit belongs to a qubit ladder), for instance, q2 and $qb_{2,1}$, q3 and $qb_{3,1}$, q4 and $qb_{4,1}$, as well as other pairs of adjacent qubits shown in these figures, can exchange the quantum information between each other in a similar manner as said qubits q1 and $qb_{1,1}$.

In some cases of the present specification, a number of times the quantum information should be exchanged between pairs of qubits belonging to the same or different species of qubits during performing 300 the plurality of quantum computational operations on the quantum computing system can depend on one or more of the following factors: i) a specific qubit arrangement of the quantum computing system on a 2D lattice; ii) a specific physical system mapped and simulated on the quantum computing system; iii) a specific encoding used for encoding the physical system into the plurality of qubits of the quantum computing system; iv) decompositions of quantum computational operations to be performed for the physical system under consideration into corresponding quantum computational operations carried out by native hardware gates.

According to the first aspect, the steps of performing 400 the plurality of quantum computational operations on the number of chains of qubits and performing 500 the plurality of quantum computational operations on the number of ladders can further comprise performing 410 a number of quantum computational operations of the plurality of quantum computational operations on the one or more qubits 1a; 1c of the number of chains of the first plurality of qubits that are adjacent to the respective one or more qubits 2a; 2c of the number of ladders of the second plurality of qubits. In the embodiment of **Fig. 3a,** twelve qubits q1 to q4 and q11 to q18 of the number of chains of the first plurality of qubits are such qubits that are adjacent to qubits $qb_{i,1}$ to $qb_{i,1}$ of the number of ladders of the second plurality of qubits, where i runs from 1 to 4 and from 5 to 12, respectively (the adjacency of these pairs of qubits is indicated by dashed lines in accordance with the discussions above). In the other embodiment displayed in **Fig. 3b,** all twelve qubits q1 to q12 of the number of chains of the first plurality of qubits are adjacent to qubits $qb_{i,1}$ to $qb_{i,1}$ of the number of ladders of the second plurality of qubits, where i runs from 1 to 12, respectively. In some cases, the steps 400, 500 of performing the plurality of quantum computational operations can comprise performing 510 a number of quantum computational operations of the plurality of quantum computational operations on said respective one or more qubits 2a; 2c of the number of ladders of the second plurality of qubits. For instance, such quantum computational operations can be carried out on twelve ladder qubits $qb_{i,1}$ to $qb_{i,1}$ (i runs from 1 to 12) that are adjacent to the corresponding qubits of the number of chains of the first plurality of qubits shown in these figures.

In the present techniques, the steps 400, 500 of performing the plurality of quantum computational operations can further comprise performing 520 a number of quantum computational operations of the plurality of quantum computational operations on a number of qubits 2b; 2d of the number of ladders of the second plurality of qubits for which no adjacent qubit from the number of chains of the first plurality of qubits is available. In the embodiments of **Figs. 3a** and **3b,** none of the qubits $qb_{i,2}$ (i runs from 1 to 12) of the number of ladders of the second plurality of qubits has an adjacent qubit from the first plurality of qubits. In some cases, a qubit of each qubit ladder for which no adjacent qubit from the number of chains of the first plurality of qubits is available can exchange the quantum information with a corresponding qubit of the same qubit ladder that is adjacent to said qubit of the number of chains. Returning to the examples of **Figs. 3a** and **3b:** Each qubit $qb_{i,2}$ is adjacent with respect to the qubit $qb_{i,1}$ (i runs from 1 to 12), so that they can exchange the quantum information between each other. In addition, when a qubit ladder (e.g., one or more or each qubit ladder) comprises more than two qubits (a situation not shown in the figures), adjacent qubits of the said qubit ladder can exchange the quantum information between each other in accordance with the above discussions (i.e., when, for example, none of these adjacent qubits of the qubit ladder has an adjacent qubit from the number of chains of the first plurality of qubits).

In some examples of the present disclosure, the step 400 of performing the plurality of quantum computational operations on the number of chains of qubits can further comprise performing 420 a number of quantum computational operations of the plurality of quantum computational operations on a number of qubits of the number of chains of the first plurality of qubits for which no adjacent qubit from the number of ladders of the second plurality of qubits is available. For example, in the embodiment of **Fig. 3a,** none of the qubits q5 to q10 and q19 to q21 of the number of chains of the first plurality of qubits has an adjacent qubit that belongs to one of the qubit ladders shown in this figure. In other cases, such as those disclosed in connection with the embodiment of **Fig. 3b,** each qubit q1 to q12 of the number of chains of the first plurality of qubits is adjacent to a respective qubit from the qubit ladder of the number of qubit ladders: In other words, for such embodiments, the step 420 of performing the number of quantum computational operations defined above is irrelevant.

In some cases, the first aspect can further comprise receiving the quantum information from the qubit q4 of the respective chain 15b of the number of disconnected chains or the one or more pairs of chains by the first qubit 3a; qh1 of the chain of the one or more auxiliary chains 15c of the first plurality of qubits. This method step can come into play for those embodiments of the first aspect, when the first plurality of qubits comprises the one or more auxiliary chains of qubits 15c; 3a-3c, as elucidated further above in connection the discussions related to configuring the quantum computing system and **Fig. 3b.** Next, the method can further comprise transmitting the quantum information from the first qubit 3a; qh1 to the second qubit 3b; qh6 of the chain of the one or more auxiliary chains 15c of the first plurality of qubits by iterative applying a number of subsequent SWAP operations between adjacent qubits of the chain qh2-qh5 of the one or more auxiliary chains 15c of the first plurality of qubits that are arranged between said qubits (see **Fig. 3b).** Finally, in connection with embodiments for which auxiliary chains are available, the present techniques can further comprise transmitting the quantum information from the second qubit 3b; qh6 of the chain of the one or more auxiliary chains 15c of the first plurality of qubits to the qubit q5 of the other chain from the number of disconnected chains or the one or more pairs of chains that is subsequent with respect to the respective chain. It should be noted that qubits q4 and qh1 are adjacent qubits as discussed further above. The same also applied to the qubits qh6 and q5, which are also adjacent qubits.

In some examples of the present techniques, the SWAP operations mentioned above can be carried out by a respective quantum circuit for swapping two qubits (not shown in the figures). In some examples, the respective quantum circuit can comprise three CNOT quantum gates known for those skilled in the art (see, e.g., M. A. Nielsen and I. L. Chuang, "Quantum Computation and Quantum Information": 10th Anniversary Edition, Cambridge University Press, 2010). In addition or alternatively, one or more SWAP operations can comprise a respective decomposition of said SWAP operation into corresponding quantum computational operations carried out by native hardware gates.

In the techniques of the present disclosure, the number of ladders of the second plurality of qubits can comprise a first set of qubit ladders 16a-16d that include a first ladder 16a and one or more qubit ladders 16b-16d. In a non-limiting example and for further discussions, the lower set of qubit ladders in the embodiment of **Fig. 4** may be referred to as "the first set of qubit ladders", the left ladder 16a from this set may be called "the first ladder" and the three remaining qubit ladders 16b to 16d may be referred to as "the one or more qubit ladders". In some cases, the method of the first aspect can comprise transmitting the quantum information from a ladder 16b-16d of the one or more qubit ladders to the first ladder 16a by applying a SWAP operation between said ladder of the one or more qubit ladders and the first ladder, if said ladder 16b is adjacent with respect to the first ladder 16a. As a result, said ladder 16b (which is adjacent to the first ladder) and the first ladder can exchange the quantum information between each other. As described further above, a pair of adjacent qubit ladders within the same set of qubit ladders can be classified as an adjacent pair of qubit ladders, if at least a single pair of adjacent qubits belonging to a pair of said qubit ladders can be found. In some cases, a SWAP operation between two adjacent ladders may include a number of SWAP operations applied to individual qubits of these ladders. For example, said number of SWAP operations can increase as a number of qubits within the ladders under consideration increases and as a number of adjacent pairs of qubits within these two ladders decreases. For example, a qubit ladder 16b in **Fig. 4,** which is located next to the left ladder 16a of the lower set of qubit ladders, can be considered as a qubit ladder being adjacent to said left ladder of qubits 16b, because there are two pair of adjacent qubits, namely $(qb_{8,1}, qb_{7,1})$ and $(qb_{8,2}, qb_{7,2})$, that belong to these two ladders 16a, 16b. In this case, the SWAP operation between two adjacent ladders 16a, 16b (each of these ladders consists of two qubits) can include applying two SWAP operations between two pairs of adjacent qubits $(qb_{8,1}, qb_{7,1})$ and $(qb_{8,2}, qb_{7,2})$.

Otherwise, if said ladder 16d is non-adjacent with respect to the first ladder 16a, the method of the first aspect can comprise transmitting the quantum information from a ladder 16b-16d of the one or more qubit ladders to the first ladder 16a by applying a number of subsequent SWAP operations between said ladder 16d and adjacent ladders 16b; 16c of the one or more qubit ladders that are arranged between said ladder 16d of the one or more qubit ladders and the first ladder 16a. Returning to the embodiment of **Fig. 4:** The ladder 16c is not adjacent to the ladder 16a (i.e., to "the first ladder" according to the terminology used above). Therefore, the quantum information from the ladder 16c that is not adjacent to the ladder 16a can be at first transmitted to its adjacent ladder 16b, e.g., by applying two SWAP operations between two pairs of adjacent qubits $(qb_{7,1}, qb_{6,1})$ and $(qb_{6,2}, qb_{7,2})$. As a result, these two adjacent ladders 16c and 16b can exchange the quantum information between each other, so that the quantum information of the ladder 16c is physically located on the ladder 16b. In the next step, and in accordance with the above discussions, the SWAP operation can be applied between the ladder 16b and the first ladder 16a to exchange the quantum information of the ladders 16b and 16a. Because of the last SWAP operation between the ladders 16b and 16a, the quantum information of the ladder 16c, which is physically located on the qubit ladder 16b as a result of the first SWAP operation between the ladders 16c and 16b, will eventually be located on the first ladder 16a. Following this strategy, the quantum information of the most distant qubit ladder 16d in the lower set of qubit ladders can be transmitted to the first ladder 16a via three subsequent SWAP operations between the qubit ladders 16c, 16b and 16a.

In some cases, swapping the quantum information along sets of qubit ladders representing the second degrees of freedom (e.g., bosonic modes) in parallel with other quantum computational operations, e.g., those that involve using the number of chains of the first plurality of qubits representing the first degrees of freedom (e.g., fermionic degrees of freedom), can potentially speed up quantum computations and/or reduce the overall depth of a quantum circuit (i.e., a path length, which represents a number of gates that must be executed along the path) involved in these computations. For example, if it is necessary to perform a quantum computational operation that represents an interaction between the first and second degrees of freedom of the physical system under consideration, the quantum information located, e.g., on one of the ladders from the set of qubit ladders can be swapped along the sets of qubit ladder towards the corresponding qubits representing the first degrees of freedom.

In the embodiments of the present techniques, where the plurality of qubits 17; 4a-4b of the plurality of qubits are present (i.e., the quantum exchange register 17 introduced above in the context of the method steps related to configuring the quantum computing system), the method of the first aspect can further comprise transmitting the quantum information from a first ladder 16a of the two or more ladders from the number of ladders of the second plurality of qubits to a first number of qubits qR4; qR5 of the number of qubits of the third plurality of qubits that are adjacent to the first ladder 16a. In some cases, a SWAP operation can be applied between the first ladder 16a and the first number of qubits qR4; qR5, which may involve a number of SWAP operations applied to individual qubits of the first ladder and the first number of qubits in a similar manner as discussed above in the context of swapping the quantum information among adjacent qubit ladders within the same set of qubit ladders. For example, in the embodiment of **Fig. 4,** the ladder 16a can be referred to as the "first ladder" that is adjacent to two qubits qR4; qR5 of the third plurality of qubits (i.e., two qubits qR4; qR5 of the quantum exchange register 17). In this case, the SWAP operation between the first ladder 16a (which consists of two qubits) and the two qubits qR4; qR5 can include applying two SWAP operations between two pairs of adjacent qubits $(qb_{8,1}, qR5)$ and $(qb_{8,2}, qR4)$.

In the next step, the method of the first aspect involving embodiments with the quantum exchange register 17, can comprise transmitting the quantum information from the first number of qubits qR4; qR5 to a second number of qubits qR2; qR3 of the number of qubits of the third plurality of qubits that are adjacent to a second ladder 16e of the two or more ladders from the number of ladders of the second plurality of qubits by iterative applying a number of subsequent SWAP operations between the first number of qubits qR4; qR5 and the second number of qubits qR2; qR3. Here, the iterative application of the number of subsequent SWAP operations can comprise iterative applying a number of subsequent SWAP operations between adjacent qubits of the third plurality of qubits that are arranged between the first number of qubits qR4; qR5 and the second number of qubits qR2; qR3, if the adjacent qubits between said qubits are available. Returning to the example of **Fig. 4:** The quantum information of the first ladder 16a physically located on the qubits qR4; qR5 of the quantum exchange register 17 (as a result of the step of transmitting defined above) can be transmitted to the second number of qubits, namely to qubits qR2; qR3 adjacent to a ladder 16e. The ladder 16e, in turn, can be interpreted as "the second ladder". In the non-limiting embodiment shown in **Fig. 4,** no qubits are available between the first number qubits qR4; qR5 and the second number of qubits qR2; qR4. In the next step, the method of the first aspect can include transmitting the quantum information from the second number of qubits qR2; qR3 of the number of qubits of the third plurality of qubits to the second ladder 16e of the two or more ladders that is adjacent to the second number of qubits. For this purpose, a SWAP operation can be applied between the second number of qubits qR2; qR3 and the second ladder 16e, which may involve a number of SWAP operations applied to individual qubits of the second number of qubits and the second ladder, see the discussions above. In the example of **Fig. 4,** the SWAP operation between the second ladder 16e (which consists of two qubits) and the two qubits qR2; qR3 can include applying two SWAP operations between two pairs of adjacent qubits $(qb_{1,1}, qR2)$ and $(qb_{1,2}, qR3)$. In this way, the quantum information initially located on qubits $(qb_{8,1}, qb_{8,2})$ of the first qubit ladder 16a can be transmitted to qubits $(qb_{1,1}, qb_{1,2})$ of the second qubit ladder 16e.

In one non-limiting example, the quantum information between qubits $(qb_{8,1}, qb_{8,2})$ of the first qubit ladder 16a and qubits $(qb_{1,1}, qb_{1,2})$ of the second qubit ladder 16e can be exchanged via the quantum exchange register 17 by applying the following sequence of SWAP operations starting from the initial encoding of the quantum information on these qubits, $qb_{1,1} \rightarrow qb_{1,1}, qb_{1,2} \rightarrow qb_{1,2}, qb_{8,2} \rightarrow qb_{8,2}, qb_{8,1} \rightarrow qb_{8,1}$:

1) $qR2 \rightarrow qb_{1,1}, qR3 \rightarrow qb_{1,2}, qR4 \rightarrow qb_{8,2}, qR5 \rightarrow qb_{8,1}$;
2) $qR2 \rightarrow qb_{1,1}, qR3 \rightarrow qb_{8,2}, qR4 \rightarrow qb_{1,2}, qR5 \rightarrow qb_{8,1}$;
3) $qR2 \rightarrow qb_{8,2}, qR3 \rightarrow qb_{1,1}, qR4 \rightarrow qb_{8,1}, qR5 \rightarrow qb_{1,2}$;
4) $qR2 \rightarrow qb_{8,2}, qR3 \rightarrow qb_{8,1}, qR4 \rightarrow qb_{1,1}, qR5 \rightarrow qb_{1,2}$;
5) $qb_{1,1} \rightarrow qb_{8,2}, qb_{1,2} \rightarrow qb_{8,1}, qb_{8,2} \rightarrow qb_{1,1}, qb_{8,1} \rightarrow qb_{1,2}$.

In some cases, a SWAP between qubits $qb_{1,1}$ and $qb_{1,2}$ can be additionally carried out as the sixth operation in the above example, so that after the exchange, the quantum information, which was originally located on the first (second) qubit of the first ladder 16a is located at the first (second) qubit of the second ladder 16e, and vice versa, the quantum information, which was originally located on the first (second) qubit of the second ladder 16e, is located on the first (second) qubit of the first ladder 16a, namely: 6) $qb_{1,1} \rightarrow qb_{8,1}, qb_{1,2} \rightarrow qb_{8,2}, qb_{8,2} \rightarrow qb_{1,1}, qb_{8,1} \rightarrow qb_{1,2}$. In the above notations, a physical qubit is indicated to the left of a respective arrow, while the quantum information of a qubit located at this physical qubit is indicated to the right of the respective arrow. For example, in the step 1) above $qR2 \rightarrow qb_{1,1}$ means that the quantum information of qubit $qb_{1,1}$ is physically located on qubit qR2.

In some cases, exchanging the quantum information between different qubit ladders representing the second degrees of freedom (e.g., bosonic modes) involving the quantum exchange register 17 in parallel with other quantum computational operations can potentially speed up quantum computations and/or reduce the overall depth of a quantum circuit involved in these computations. For example, the quantum information of a specific qubit ladder can be efficiently transported through the 2D lattice of qubits of the present disclosure, for instance, towards the corresponding qubits representing the first degrees of freedom to carry out the required quantum computational operations.

In the techniques of the present disclosure, the quantum information of each qubit of the number of chains of the first plurality of qubits (e.g., qubit chains discussed further above in connection with **Figs. 2a, 2b, 3a** and **3b)** carried by said qubit can comprise at least partial information about one or more first degrees of freedom (e.g., about fermionic degrees of freedom), or about the one or more first degrees of freedom and one or more second degrees of freedom (e.g., about bosonic modes). In the first aspect, the partial information carried by the qubit of the number of chains of the first plurality of qubits can correspond to a quantum state of this qubit. In other words, the partial information encoded into the qubit can be represented by a quantum state that this qubit possesses. In some cases, the quantum information of each qubit of the ladder from the number of ladders of the second plurality of qubits (e.g., qubit ladders discussed further above in connection with **Figs. 2a, 2b, 3a** and **3b)** carried by said qubit can comprise at least partial information regarding one or more second degrees of freedom, or regarding the one or more second degrees of freedom and the one or more first degrees of freedom. In the present specification, the partial information of each qubit of the ladder from the number of ladders can correspond to a quantum state of said qubit of the ladder. As discussed further above, a multi-qubit entangled state can be formed on qubits of the same and/or different species when quantum computational operations are performed, and consequently qubits involved in the formation of this multi-qubit state can comprise at least partial information about different degrees of freedom of the same and/or different types (e.g., one or more fermionic degrees of freedom and/or one or more bosonic modes).

In the present specification, multiple quantum computational operations can be performed to simulate a time evolution of the physical system on the quantum computing system 1000, wherein the time evolution of the physical system may be defined by a unitary time evolution of a quantum Hamiltonian of the physical system. In some cases, said unitary time evolution can be represented by a unitary time evolution operator. For example, the unitary time evolution of the physical system at time t in physical units where the reduced Planck constant $\hbar$ = 1 can be written as $U(t) = exp(-i\ t\ \mathcal{H})$ , where U(t) stands for the unitary time evolution operator, $\mathcal{H}$ is the quantum Hamiltonian of the physical system and i is the imaginary unit. In some cases, the Hamiltonian can be written as a sum of a first sub-Hamiltonian, a second sub-Hamiltonian and a third sub-Hamiltonian. Here the first sub-Hamiltonian can comprise operators representing the first degrees of freedom (e.g., fermionic degrees of freedom), the second sub-Hamiltonian can comprise operators representing the second degrees of freedom (e.g., bosonic modes), and the third sub-Hamiltonian comprise operators representing both the first and the second degrees of freedom (e.g., interacting fermionic degrees of freedom and bosonic modes). In a specific example, the Hamiltonian can be written as $\mathcal{H} = h_1 + h_2 + h_3 = \sum_{l=1}^{3} h_l$ , where $h_1$, $h_2$ and $h_3$ are the first, second and third sub-Hamiltonians, respectively, that are Hermitian operators.

In the present techniques, the unitary time evolution of the quantum Hamiltonian of the physical system within a predetermined time interval can be decomposed onto a number of time steps. For example, the predetermined time interval $T$ can be written as $T = n \cdot \tau$, where $\tau$ stands for the time step and $n$ is the number of steps (e.g., $n$ can be an integer equal to 10 or more, $10^2$ or more, $10^3$ or more, $10^4$ or more, $10^5$ or more). In some cases, the plurality of quantum computational operations introduced further above can be performed to simulate the unitary time evolution of the quantum Hamiltonian of the physical system on the quantum computing system 1000 within each time step. For this purpose, the unitary time evolution of the quantum Hamiltonian within the time step (e.g., within each time step) can be decomposed onto a unitary time evolution of the first sub-Hamiltonian, a unitary time evolution of the second sub-Hamiltonian and a unitary time evolution of the third sub-Hamiltonian. For instance, the unitary time evolution of the physical system within the time step $\tau$ given by the unitary time evolution operator defined above, $U(\tau) = exp(-i\ \tau \sum_{l=1}^{3} h_l)$ , can be decomposed as $exp(-i\tau h_1)\cdot exp(-i\tau h_2)\cdot exp(-i\tau h_3)$. This decomposition can be referred to as the Trotter expansion known to those skilled in the art (see, e.g., H. F. Trotter, "On the product of semi-groups of operators", Proc. Amer. Math. Soc. 10, 545-551(1959)). In the present techniques, the multiple quantum computational operations can comprise the number of the plurality of quantum computational operations that are performed to simulate the unitary time evolution of the quantum Hamiltonian of the physical system within the predetermined time interval. In other words, the plurality of quantum computational operations that simulate the unitary time evolution of the physical system within a single time step $\tau$ can be repeated, e.g., $n$ times to propagate said unitary time evolution over the time interval $T = n \cdot \tau$.

In the techniques of the present disclosure, the plurality of quantum computational operations on the number of chains of the first plurality of qubits can be performed to simulate the unitary time evolution of the first sub-Hamiltonian and the third sub-Hamiltonian (e.g., the sub-Hamiltonians $h_1$ and $h_3$ introduced above). In other words, the number of chains of the first plurality of qubits that represent the first degrees of freedom can be involved in quantum computational operations of those parts of the Hamiltonian of the physical system that comprise the first degrees of freedom. In turn, the plurality of quantum computational operations on the number of ladders of the second plurality of qubits can be performed to simulate the unitary time evolution of the second sub-Hamiltonian and the third sub-Hamiltonian (e.g., the sub-Hamiltonians $h_2$ and $h_3$ introduced above). Similarly, the number of ladders of the second plurality of qubits that represent the first degrees of freedom can be involved in quantum computational operations of those parts of the Hamiltonian of the physical system that comprise the first degrees of freedom.

In the present specification, the first degree of freedom can be a fermionic degree of freedom. In this case, the first sub-Hamiltonian (e.g., $h_1$) can comprise operators associated with the fermionic degrees of freedom, wherein the operator associated with the fermionic degree of freedom is a fermionic creation operator, a fermionic annihilation operator or products thereof (e.g., such product can comprise one or more, two or more, three of more fermionic creation operators and/or fermionic annihilation operators, provided that this product is a Hermitian operator). In some examples, the first sub-Hamiltonian can comprise an interaction term that describes an interaction between two or more of the fermionic degrees of freedom. In addition or alternatively, the first sub-Hamiltonian can comprise a hopping term that describes hopping between two or more of the fermionic degrees of freedom. In some cases, the unitary time evolution of the first sub-Hamiltonian within the time step $\tau$ can be decomposed onto a unitary time evolution of the interaction term and the hopping term within this time step, if both terms are present in the first sub-Hamiltonian.

In the first aspect, the second degree of freedom can be a bosonic mode. In this case, the second sub-Hamiltonian (e.g., $h_2$) can comprise operators associated with the bosonic modes, wherein the operator associated with the bosonic mode is a bosonic creation operator, a bosonic annihilation operator of the bosonic mode or products thereof (e.g., such product can comprise one or more, two or more, three of more bosonic creation operators and/or bosonic annihilation operators, provided that this product is a Hermitian operator). Furthermore, the third sub-Hamiltonian (e.g.,

$h_3$) can comprise operators that are products of operators associated with the fermionic degrees of freedom and the bosonic modes (the Hermiticity condition should also be fulfilled for these operator products). The third sub-Hamiltonian of the first aspect can describe an interaction between the bosonic modes and respective fermionic degrees of freedom.

As a non-limiting example for a coupled fermion-boson system that can be simulated using the techniques of the present disclosure is a physical system governed by the following Hamiltonian:

$$\mathcal{H} = \sum_{i=1,\sigma\in\uparrow,\downarrow}^{N-1} V\, c_{i,\sigma}^\dagger c_{i+1,\sigma} + h.c. + \sum_{i=1}^{N} U n_{i,\uparrow} n_{i,\downarrow} + \sum_{i=1}^{N} \omega_i\, b_i^\dagger b_i +$$

$$\sum_{i=1}^{N-1} g_{i,\downarrow}\, c_{i,\downarrow}^\dagger c_{i+1,\downarrow}(b_i^\dagger + b_i) + h.c. + \sum_{i=1}^{N-1} g_{i,\uparrow}\, c_{i,\uparrow}^\dagger c_{i+1,\uparrow}(b_i^\dagger + b_i) + h.c. \quad (1),$$

where h.c. denotes Hermitian conjugate, $c_{i,\sigma}^\dagger$ and $c_{i,\sigma}$ are, respectively, fermionic creation and annihilation operators for an electron in orbital $i$ with spin $\sigma=\uparrow,\downarrow$, and $n_{i,\sigma} = c_{i,\sigma}^\dagger c_{i,\sigma}$ is the number operator. Here $b_i^\dagger$ and $b_i$ are, respectively, bosonic creation and annihilation operators for an i-th bosonic mode with frequency $\omega_i$. In the above expression, $V$ is the hopping coefficient, $U$ is the interaction strength of the fermionic degrees of freedom (describing, e.g., interaction of the electrons in orbitals i and i+1 with spin $\sigma=\uparrow,\downarrow$) and $g_{i,\sigma}$ stands for the coupling strength between the corresponding fermionic degrees of freedom (e.g., the electrons in orbitals i and i+1 with spin $\sigma=\uparrow,\downarrow$) and the i-th bosonic mode. For the physical system described by the Hamiltonian above, the number of bosonic modes is smaller than the number of fermionic degrees of freedom. In this case, the physical system can be mapped onto the quantum computing system arranged on the 2D lattice with the topology shown in **Fig. 2a.** For example, for $N - 1 = 10$ bosonic modes there are 2N = 22 fermionic degrees of freedom. In this specific case, the physical system can be mapped onto the quantum computing system arranged on the 2D lattice similar to that shown in **Fig. 3a** (with twelve ladders 16 representing bosonic modes and twenty one qubits q1 to q21 representing fermionic degrees of freedom): The only difference that should be implemented to the embodiment of **Fig. 3a** is the insertion of an additional qubit, i.e., a twenty-second qubit, to the chains of the first plurality of qubits.

Another non-limiting example for a coupled fermion-boson system that can be simulated using the techniques of the present disclosure is a physical system governed by the following Hamiltonian (all notations are kept similar to those used in the previous example):

$$\mathcal{H} = \sum_{i=1,\sigma\in\uparrow,\downarrow}^{N-1} V\, c_{i,\sigma}^\dagger c_{i+1,\sigma} + h.c. + \sum_{i=1}^{N} U n_{i,\uparrow} n_{i,\downarrow} + \sum_{i=1}^{N} \omega_i\, b_i^\dagger b_i +$$

$$\sum_{i=1}^{N} g_i\, c_{i,\downarrow}^\dagger c_{i,\downarrow}(b_i^\dagger + b_i) + \sum_{i=1}^{N} g_i\, c_{i,\uparrow}^\dagger c_{i,\uparrow}(b_i^\dagger + b_i) \quad (1a).$$

For the physical system described by the Hamiltonian (1a), the number of bosonic modes is smaller than the number of fermionic degrees of freedom. In this case, the physical system can be mapped onto the quantum computing system arranged on the 2D lattice with the topology shown in **Fig. 2a** [similar to the case discussed above in connection with the Hamiltonian (1)]. For example, for $N = 12$ bosonic modes there are 2N = 24 fermionic degrees of freedom. In this specific case, the physical system can be mapped onto the quantum computing system arranged on the 2D lattice similar to that shown in **Fig. 3a** (with twelve ladders 16 representing bosonic modes and twenty one qubits q1 to q21 representing fermionic degrees of freedom): The only difference that should be implemented to the embodiment of **Fig. 3a** is the insertion of an additional three qubits, i.e., a twenty-second, twenty third and twenty fourth qubit, to the chains of the first plurality of qubits. In an example, the so-called jellium model describing electrons in a solid with a simplified on-site Coulomb repulsion coupled to phonons with only one polarisation (see, e.g., "Many-Body Quantum Theory in Condensed Matter Physics. An Introduction", Bruus K. and Flensberg K., Oxford University Press 2007) may be given by the Hamiltonian (1). (In some cases, the only possible difference from the Hamiltonian (1) may be related to the effects of boundary conditions.)

A third non-limiting example of a coupled fermion-boson system that can be simulated by means of the present techniques is a physical system described by the following Hamiltonian (all notations are kept similar to those used in the previous examples):

$$\mathcal{H} = \sum_{i=1,\sigma\in\uparrow,\downarrow}^{N-1} V\, c_{i,\sigma}^{\dagger} c_{i+1,\sigma} + h.c. + \sum_{i=1}^{N} U n_{i,\uparrow} n_{i,\downarrow} + \sum_{i=1,\sigma\in\uparrow,\downarrow}^{N} \omega_{i,\sigma}\, b_{i,\sigma}^{\dagger} b_{i,\sigma} +$$

$$\sum_{i=1}^{N} g_{i,\downarrow}\, c_{i,\downarrow}^{\dagger} c_{i,\downarrow} (b_{i,\downarrow}^{\dagger} + b_{i,\downarrow}) + h.c. + \sum_{i=1}^{N} g_{i,\uparrow}\, c_{i,\uparrow}^{\dagger} c_{i,\uparrow} (b_{i,\uparrow}^{\dagger} + b_{i,\uparrow}) + h.c. \qquad (2)$$

For the physical system governed by the Hamiltonian above, the number of bosonic modes is equal to the number of fermionic degrees of freedom. In this case, the physical system can be mapped onto the quantum computing system arranged on the 2D lattice with the topology shown in **Fig. 2b.** For example, for 2N = 12 bosonic modes there are 2N = 12 fermionic degrees of freedom. In this specific case, the physical system can be mapped onto the quantum computing system arranged on the 2D lattice depicted in **Fig. 3b** (with twelve ladders 16 representing bosonic modes and twelve qubits q1 to q12 representing fermionic degrees of freedom). In another example, for which 2N = 4 bosonic modes and 2N = 4 fermionic degrees of freedom, the physical system can be mapped onto the quantum computing system arranged on the 2D lattice depicted in **Fig. 5a** (with four ladders 16 representing bosonic modes and four qubits q1 to q4 representing fermionic degrees of freedom).

A fourth non-limiting example of a coupled fermion-boson system that can be simulated by means of the present techniques is a physical system described by the following Hamiltonian (all notations are kept similar to those used in the previous example):

$$\mathcal{H} = \sum_{i=1,\sigma\in\uparrow,\downarrow}^{N-1} V\, c_{i,\sigma}^{\dagger} c_{i+1,\sigma} + h.c. + \sum_{i=1}^{N} U n_{i,\uparrow} n_{i,\downarrow} + \sum_{i=1,\lambda\in\{0,1,3\}}^{N} \omega_{i,\lambda}\, b_{i,\lambda}^{\dagger} b_{i,\lambda} +$$

$$\sum_{i=1,\lambda}^{N} g_{i,\lambda}\, c_{i,\downarrow}^{\dagger} c_{i,\downarrow} (b_{i,\lambda}^{\dagger} + b_{i,\lambda}) + \sum_{i=1,\lambda}^{N} g_{i,\lambda}\, c_{i,\uparrow}^{\dagger} c_{i,\uparrow} (b_{i,\lambda}^{\dagger} + b_{i,\lambda}) \qquad (2a).$$

For the physical system governed by the Hamiltonian (2a), the number of bosonic modes is larger than the number of fermionic degrees of freedom. For example, for 3N = 12 bosonic modes, there are 2N = 8 fermionic degrees of freedom. In this specific case, the physical system can be mapped onto the quantum computing system arranged on the 2D lattice with a topology similar to that depicted in **Fig. 3b** (with twelve ladders 16 representing bosonic modes and eight qubits 15b representing fermionic degrees of freedom): The only difference that should be implemented to the embodiment of **Fig. 3b** is the replacement of four qubits from the chains of the first plurality of qubits by four auxiliary qubits (e.g., four qubits q4, q5, q11 and q12 may be replaced by four auxiliary qubits). In an example, the jellium model discussed above in connection with the Hamiltonian (1a) dealing with electrons in a solid with a simplified on-site Coulomb repulsion may lead to the Hamiltonian (2a) when several polarizations are considered in the model (e.g. optical and acoustic modes are considered). (In some cases, the only possible difference from the Hamiltonian (2a) may be related to the effects of boundary conditions, when considering coupling to phonons with three polarisations).

In some examples of the present techniques, the hopping coefficients V can be the different for all hopping terms of the Hamiltonian $\mathcal{H}$ (e.g., for one or more of the Hamiltonians given by equations (1), (1a), (2) and (2a) above). In other examples, two or more (e.g., all) hopping coefficients V can be the same. In some cases, all interaction coefficients $U$ can be the different, or two or more (e.g., all) interaction coefficients $U$ can be the same. In some cases, all coupling strengths $g_{i,\sigma}$ can be different, or two or more (e.g., all) interaction coefficients $g_{i,\sigma}$ can be the same. In some cases, all bosonic frequencies $\omega_i$ can be the different, or two or more (e.g., all) bosonic frequencies $\omega_i$ can be the same.

In the techniques of the present disclosure, the step 300 of performing the plurality of quantum computational operations can further comprise initially ordering a plurality of the first degrees of freedom (e.g., fermionic degrees of freedom) onto the number of chains of the first plurality of qubits, wherein each of the plurality of the first degrees of freedom is mapped onto respective qubit from the number of chains of the first plurality of qubits. For example, four fermionic degrees of freedom $(1,\uparrow)$, $(1,\downarrow)$, $(2,\downarrow)$ and $(2,\uparrow)$ described by the fermionic creation and annihilation operators

$c^{\dagger}_{1,\sigma}$ , $c_{1,\sigma}$, $c^{\dagger}_{2,\sigma}$ and $c_{2,\sigma}$ introduced above (with $\sigma = \uparrow, \downarrow$), can be assigned to qubits q1 to q4 of a single chain of the first plurality of qubits illustrated in **Fig. 5a** as follows:

$$(1,\uparrow) \to q1, (1,\downarrow) \to q2, (2,\downarrow) \to q3, (2,\uparrow) \to q4 \quad (3).$$

In other words, the quantum information associated with these four fermionic degrees of freedom is physically located on qubits q1 to q4 in the above-defined order that can be, e.g., represented by a quantum state of these qubits (see, e.g., https://doi.org/10.1103/PhysRevLett.120.110501 for further details). The ordering of the four fermionic degrees of freedom in this non-limiting example is schematically illustrated in the upper dashed rectangle 20a of **Fig. 5b.**

In the first aspect, the step 300 of performing the plurality of quantum computational operations can further comprise initially mapping one or more of the second degrees of freedom (e.g., bosonic modes) onto respective one or more ladders from the number of ladders of the second plurality of qubits. For example, in the embodiment of **Fig. 5a,** a first bosonic mode $|Mode1\rangle_b$ can be mapped onto qubits of a ladder 16 with qubits ($qb_{2,1}$, $qb_{2,2}$) (this ladder is enclosed in a dashed ellipse in this figure):

$$|Mode1\rangle_b \to qb_{2,1}\, qb_{2,2} \quad (4).$$

In this non-limiting embodiment, when only a single bosonic mode is present, the other three ladders do not participate in the quantum computations: For example, no quantum computational operations will be carried out on qubits of these remaining ladders. In the binary encoding defined above, four Fock states for the first bosonic mode, $|Mode1\rangle_b$, can be encoded into the two qubits ($qb_{2,1}$, $qb_{2,2}$) of the ladder 16 shown in **Fig. 5a**. For example, this encoding can be given in the bra-ket notations known in the art in the following way: $|00\rangle = |0\rangle_b$, $|01\rangle = |1\rangle_b$, $|10\rangle = |2\rangle_b$, $|11\rangle = |3\rangle_b$ (see also discussions further below). Here the ket vector, e.g., $|01\rangle$, may correspond to the case when the qubit $qb_{2,1}$ is in excited state, while the other qubit of the ladder 16, $qb_{2,1}$, is in its ground state. For the case of the unary encoding only two Fock states for the first bosonic mode, $|Mode1\rangle_b$, can be encoded into the two qubits ($qb_{2,1}$, $qb_{2,2}$) of the ladder 16 shown in **Fig. 5a**. In an example, this unary encoding can be written as: $|01\rangle = |0\rangle_b$, $|10\rangle = |1\rangle_b$. It should be noted that the exact implementation of digital quantum simulations (at the level of individual quantum operations) can depend on the selected encoding of the bosonic modes into qubits of the qubit ladders.

The method of the present disclosure can further comprise initializing one or more qubits from the number of chains of the first plurality of qubits and one or more qubits from the number of ladders of the second plurality of qubits to an initial quantum state. In the first aspect, the one or more qubits from the number of chains of the first plurality of qubits and the one or more qubits from the number of ladders of the second plurality of qubits can be configured to be initialized to the initial quantum state. In accordance with the discussions above, the initial quantum state of said qubits can represent a quantum state relating to the first degrees of freedom and the second degrees of freedom. In some cases, the quantum state is a product quantum state of a first quantum state relating to the first degrees of freedom and a second quantum sate relating to the second degrees of freedom, wherein the first quantum state is represented by the one or more qubits (e.g., each qubit) from the number of chains of the first plurality of qubits and the second quantum state is represented by the one or more qubits (e.g., each qubit) from the number of ladders of the second plurality of qubits.

In some cases, the initial quantum state of said qubits can be a multi-qubit quantum state, wherein the multi-qubit quantum state is a tensor product state (also referred to as a separable quantum state) involving the tensor product of each single-qubit quantum state of the one or more qubits from the number of chains of the first plurality of qubits and the one or more qubits from the number of ladders of the second plurality of qubits. In one example, the quantum state of a qubit can be a zeroth quantum state corresponding to, e.g., a ground state of said qubit (i.e., a state with the lowest energy, or, in other words, an unexcited state). This state may be represented, e.g., by a ket-vector $|0\rangle$ in the bra-ket notations known to those skilled in the art. In other examples, the quantum state of the qubit can be a first quantum state corresponding to, e.g., a first excited state of said qubit (that is, the excited state closest in energy to the ground state). This state may be represented, in turn, by a ket-vector $|1\rangle$. In still other examples, the quantum state of the qubit of the first one or more qubits can be a linear superposition of the zeroth and first quantum states. In this case the quantum state of the qubit can be written, for instance, as $|\psi\rangle = \alpha|0\rangle + \beta|1\rangle$, where $\alpha$ and $\beta$ are some nonzero amplitudes. Returning to the above mentioned tensor product state: In some cases, it can be written as $|\varphi\rangle_1 \otimes |\varphi\rangle_2 .... \otimes |\varphi\rangle_L$, where $L$ is the number of qubits involved into said tensor product state and $\otimes$ denotes the tensor product. For example, the tensor product state of the two qubits ($qb_{2,1}$, $qb_{2,2}$) of the ladder 16 shown in **Fig. 5a,** whose quantum states are linear superpositions of the zeroth and first quantum states, $|\varphi\rangle_1 = \alpha_1|0\rangle + \beta_1|1\rangle$ and $|\varphi\rangle_2 = \alpha_2|0\rangle + \beta_2|1\rangle$, can be written as $|\psi\rangle = \alpha_1\alpha_2|00\rangle + \alpha_1\beta_2|01\rangle + \alpha_2\beta_1|10\rangle + \beta_1\beta_2|11\rangle$, where $\alpha_i$ and $\beta_i$ ($i = 1,2$) are corresponding amplitudes.

In the first aspect, and in accordance with the discussions above, the initial tensor product state can be represented as a product state of a quantum state of the fermionic degrees of freedom and a quantum state of the bosonic modes. In one specific case, the fermionic state can correspond to the ground state of the full non-interacting fermionic part of the Hamiltonian of the physical system and the bosonic modes are in the unexcited state $|0\rangle_b$. In other cases, the fermionic state can correspond to the ground state of the full interacting fermionic part of the Hamiltonian of the physical system and the bosonic modes are in their unexcited states, $|0\rangle_b$. In some cases, the ground state of the full interacting fermionic part of the Hamiltonian can be generated using a corresponding quantum algorithm.

In the techniques of the present disclosure, where the first degree of freedom is a fermionic degree of freedom and the second degree of freedom is a bosonic mode, the step 300 of performing the plurality of quantum computational operations can further comprise exchanging 700 the quantum information between each qubit from a number of odd-numbered qubits (q1; q3) of the number of chains of the first plurality of qubits and respective adjacent even-numbered qubit (q2; q4) located to a pregiven side with respect to said odd-numbered qubit, if the even-numbered qubit located to the pregiven side with respect to said odd-numbered qubit exists. Here the respective adjacent even-numbered qubit can be a qubit from a number of even-numbered qubits of the number of chains of the first plurality of qubits. For example, the second qubit q2, which is an even-numbered qubit representing the fermionic degree of freedom $(1,\downarrow)$ initially encoded to it, is located to the right with respect to the first qubit q1, which is an odd-numbered qubit representing the fermionic degree of freedom $(1,\uparrow)$ initially encoded to it. These qubits can exchange their quantum information, as schematically illustrated by arrows in the upper dashed rectangle 20a of **Fig. 5b.** Similarly, the fourth qubit q4, which is an even-numbered qubit representing the fermionic degree of freedom $(2,\uparrow)$ initially encoded to it, is located to the right with respect to the first qubit q3, which is an odd-numbered qubit representing the fermionic degree of freedom $(2, \downarrow)$ initially encoded to it. These qubits can also exchange their quantum information, as schematically illustrated by arrows in the upper dashed rectangle 20a of **Fig. 5b.** In an example, both exchanging steps can be carried out within a first step of digital quantum simulations (see also further explanations).

In the present specification, exchanging 700 the quantum information between adjacent qubits q1, q2; q3, q4 from the number of chains of the first plurality of qubits can be carried out by applying a fermionic SWAP operation (FSWAP) 21 between these adjacent qubits, wherein the fermionic SWAP operation preserves fermionic anti-commutation relations between operators associated with the fermionic degrees of freedom encoded into said qubits. For example, the FSWAP operation can be defined as a unitary transformation which swaps two fermionic degrees of freedom. In an example, the FSWAP transformation can be defined for the annihilation and creation operators of the fermionic degrees of freedom introduced above as: $$FSWAP_{i,i'}^{\dagger} c_{i,\sigma}^{\dagger} FSWAP_{i,i'} = c_{i',\sigma}^{\dagger}$$ ,

$FSWAP_{i,i'} c_{i,\sigma} FSWAP_{i,i'}^{\dagger} = c_{i',\sigma}$ , where $\sigma \in \uparrow, \downarrow$. In one specific case, the FSWAP operation can be given by the following expression:

$$FSWAP_{i,i'} = 1 + c_{i,\sigma}^{\dagger} c_{i',\sigma} + c_{i',\sigma}^{\dagger} c_{i,\sigma} - c_{i,\sigma}^{\dagger} c_{i,\sigma} - c_{i',\sigma}^{\dagger} c_{i',\sigma},$$

see https://doi.org/10.1103/PhysRevLett.120.110501 for further details.

In the next step, the method of the first aspect can comprise performing 710 a number of available quantum computational operations from the plurality of quantum computational operations on one or more qubits 1a-1d from the number of chains of the first plurality of qubits. In some cases, the number of available quantum computational operations on the qubits from the number of chains of the first plurality of qubits can be performed to simulate the unitary time evolution of the first sub-Hamiltonian within the time step (e.g., within each time step). In an example, the unitary time evolution of the first sub-Hamiltonian within the time step $\tau$ can be written as: $exp(-i\tau h_1)$, in agreement with the discussions further above. In some cases, "availability" of the quantum computational operations may depend on one or more of the following factors: i) the structure of the Hamiltonian under consideration, ii) mapping used for the fermionic degrees of freedom (e.g., the one based on the Jordan-Wigner transformation) and iii) a step of digital quantum simulations. In other words, a number of quantum computational operations can be available at the first step of digital quantum simulations, while another number of quantum computational operations can be available at the second step of digital quantum simulations, and so on. It should be noted that after carrying out the plurality of quantum computational operations on the 2D qubit lattice of the present disclosure, the unitary time evolution of all terms of the quantum Hamiltonian of the physical system within the time step (e.g., within the time step $\tau$) can be simulated, as elucidated above.

For the case when the physical system is governed by the Hamiltonian (2) and said system is mapped onto the 2D lattice shown in **Fig. 5a,** the first step of the digital quantum simulations may describe the unitary time evolution of the interaction term related to the fermionic degrees of freedom $(1,\uparrow)$, $(1,\downarrow)$, $(2,\downarrow)$ and $(2,\uparrow)$, while the unitary time evolution of the hopping term is unavailable at this stage of the digital quantum simulations (see also initial ordering of the four fermionic degrees of freedom given by Eq. (3)). For instance, the unitary time evolution of the hopping term can be simulated in the second step of the digital quantum simulations (see further discussions below). Specifically, the following unitary time evolution of the interaction term of the first sub-Hamiltonian within the time step $\tau$ can be simulated in the first step of the digital quantum simulations:

$$exp\left(-i\ U\ n_{1,\uparrow}n_{1,\downarrow}\tau\right) \cdot exp\left(-i\ U\ n_{2,\uparrow}n_{2,\downarrow}\tau\right).$$

In some cases of the present disclosure, and for the sake of convenience, a quantum operation that describes the simulation of the first sub-Hamiltonian within the time step $\tau$ can be combined with the FSWAP operation. This quantum operation can be referred to as the fermionic simulation (FSIM) operation. In the example of the Hamiltonian (2), the FSIM operation acting on respective qubits can be written as:

$$FSIM(\tau V, \tau U) = exp\left(-i\ V\left(c_{i,\sigma}^{\dagger}c_{i',\sigma} + c_{i',\sigma}^{\dagger}c_{i,\sigma}\right)\tau\right) \cdot exp\left(-i\ U\ n_{1,\uparrow}n_{1,\downarrow}\tau\right)\ FSWAP_{i,i'},$$

where $\sigma = \uparrow, \downarrow$. Thus, the first step of the digital quantum simulations in the example discussed above can be written by means of the FSIM operation as: $FSIM(0,\ \tau U)$ $q$1 $q$2 and $FSIM(0,\ \tau U)$ $q$3 $q$4.

The techniques of the present disclosure can further comprise performing 720 a number of available quantum computational operations from the plurality of quantum computational operations involving two adjacent qubits (q1, q2) of the number of chains of the first plurality of qubits and a respective qubit ladder 16 having a qubit (qb$_{2,1}$) being adjacent to one (q2) of said adjacent qubits (q1; q2) of the number of chains of the first plurality of qubits. Here the respective qubit ladder is a qubit ladder from the number of ladders of the second plurality of qubits, wherein a corresponding bosonic mode is encoded by the respective qubit ladder. In some cases, the number of available quantum computational operations involving the two adjacent qubits of the number of chains of the first plurality of qubits and the respective qubit ladder having the qubit being adjacent to the one of said adjacent qubits of the number of chains of the first plurality of qubits can be performed to simulate the unitary time evolution of the third sub-Hamiltonian within the time step (e.g., within each time step). In an example, the unitary time evolution of the first sub-Hamiltonian within the time step $\tau$ can be written as: $exp(-i\ \tau\ h_3)$, in agreement with the discussions further above.

Returning to the embodiment of **Fig. 5a:** The first bosonic mode $|Mode1\rangle_{\mathrm{b}}$ can be mapped onto qubits of the ladder 16 with qubits (qb$_{2,1}$, qb$_{2,2}$). The qubit qb$_{2,1}$ of this ladder is adjacent to the qubit q2 of the chain of the first plurality of qubits (as before the adjacency between qubits qb$_{2,1}$ and q2 is illustrated by a dashed line in this figure). For the case when the physical system is governed by the Hamiltonian (2) and said system is mapped onto the 2D lattice shown in **Fig. 5a,** the first step of the digital quantum simulations may further describe the unitary time evolution of a fermion-boson interaction associated with the first bosonic mode encoded into qubits qb$_{2,1}$ and qb$_{2,2}$ of the qubit ladder 16 and the fermionic degrees of freedom (1,$\uparrow$) and (2,$\uparrow$). It should be noted that said fermionic degrees of freedom (1,$\uparrow$) and (2,$\uparrow$) are now encoded into the qubits q2 and q3 as schematically illustrated in the dashed rectangle 20b of **Fig. 5b,** since two FSWAP operations have been already carried out, see the upper dashed rectangle 20a and previous explanations. Specifically, the following unitary time evolution of the fermion-boson interaction term of the third sub-Hamiltonian within the time step $\tau$ can be simulated in the first step of the digital quantum simulations:

$$exp\left(-i\ g\ (c_{1,\uparrow}^{\dagger}c_{1,\uparrow} + c_{2,\uparrow}^{\dagger}c_{2,\uparrow})(b^{\dagger} + b)\tau\right)\ (3),$$

where $b^{\dagger}$ ($b$) are creation (annihilation) operators describing the first bosonic mode and $g \in \mathbb{R}$ is the coupling strength. In one non-limiting example, as will be explained further below, the unitary time evolution of the fermion-boson interactions can be simulated based on quantum circuits shown **Figs. 6a** to **6c.**

In the techniques of the present disclosure, the step 300 of performing the plurality of quantum computational operations can further comprise exchanging 730 the quantum information between each qubit from the number of even-numbered qubits (q2) of the number of chains of the first plurality of qubits and respective adjacent odd-numbered qubit (q3) located to the pregiven side with respect to said even-numbered qubit, if the odd-numbered qubit located to the pregiven side with respect to said even-numbered qubit exists. Here the respective adjacent odd-numbered qubit is a qubit from a number of odd-numbered qubits of the number of chains of the first plurality of qubits. For example, the third qubit q3, which is an odd-numbered qubit representing the fermionic degree of freedom (2,$\uparrow$) after performing the FSWAP operation during the first step of the digital quantum simulations, is located to the right with respect to the second qubit q2. The qubit q2 is an even-numbered qubit, which represents the fermionic degree of freedom (1,$\uparrow$) after performing the FSWAP operation during the first step of the digital quantum simulations. The qubits q2 and q3 can exchange their quantum information, as schematically illustrated by an arrow 22 in the dashed rectangle 20b shown in Fig. 5b. In an example, this exchanging step can be carried out within a second step of digital quantum simulations.

In the next step, the method of the first aspect can comprise performing 740 a number of available quantum computational operations from the plurality of quantum computational operations on the one or more qubits 1a-1d from the number of chains of the first plurality of qubits. This method step can be carried out similar to the method step 710 elucidated further above. For the case when the physical system is governed by the Hamiltonian (2) and said system is mapped onto the 2D lattice shown in **Fig. 5a,** the second step of the digital quantum simulations may describe the unitary time evolution of the hopping term related to the fermionic degrees of freedom $(2,\uparrow)$ and $(1,\uparrow)$, while the unitary time evolution of the other terms of the first sub-Hamiltonian is unavailable at this stage of the digital quantum simulations. Specifically, the following unitary time evolution of the hopping term of the first sub-Hamiltonian within the time step $\tau$ can be simulated in the second step of the digital quantum simulations:

$$exp\big(-i\,V(c_{1,\uparrow}^{\dagger}c_{2,\uparrow} + c_{1,\uparrow}c_{2,\uparrow}^{\dagger})\tau\big).$$

Thus, the second step of the digital quantum simulations in the example discussed above can be written by means of the FSIM operation as: *FSIM($\tau V$, 0) q2 q3*. As a result of this operation, the fermionic degrees of freedom will be arranged as displayed in the dashed rectangle 20c (third from top) of **Fig. 5b.**

The techniques of the present disclosure can further comprise performing 750 a number of available quantum computational operations from the plurality of quantum computational operations involving the two adjacent qubits (q1, q2) of the number of chains of the first plurality of qubits and the respective qubit ladder 16 having the qubit ($qb_{2,1}$) being adjacent to the one (q2) of said adjacent qubits (q1, q2) of the number of chains of the first plurality of qubits. This method step can be carried out similar to the method step 720 disclosed further above. Returning to the Hamiltonian (2) mapped on to the 2D lattice depicted in **Fig. 5a:** Quantum computational operations describing the unitary time evolution of the fermion-boson interaction involving qubits defined in the method step 750 are unavailable in the second step of the digital quantum simulations. In this case the digital quantum simulations can continue with a third step, as described below.

In the next step, the method of the first aspect can comprise iteratively repeating 760 the steps of exchanging information and performing the numbers of available quantum computational operations, until all numbers of available quantum computational operations from the plurality of quantum computational operations are carried out. For the case when the physical system is governed by the Hamiltonian (2) and said system is mapped onto the 2D lattice shown in **Fig. 5a,** further possible steps of the digital quantum simulations can be as follows:

*3) FSIM(0,0) q1 q2* and *FSIM(0,0) q4 q3:* These are two FSWAP operations (arguments of both FSIM-operations are zero) necessary to bring the fermionic degrees of freedom $(1,\downarrow)$ and $(2,\downarrow)$ to simulate the hopping term involving these fermionic degrees of freedom $(1,\downarrow)$ and $(2,\downarrow)$. As a result of this operation, the fermionic degrees of freedom will be arranged as displayed in the dashed rectangle 20d (fourth from top) of **Fig. 5b.**
Then, the fermion-boson interaction between the fermionic degrees of freedom $(1,\downarrow)$ and $(2,\downarrow)$ (which are physically located on qubits q2 and q3) and the first bosonic mode encoded into qubits $qb_{2,1}$ and $qb_{2,2}$ of the qubit ladder 16 can be simulated. This can be done in a similar manner as described above in connection with the method step 720.
*4) FSIM($\tau V$, 0) q2 q3.* This step swaps the fermionic degrees of freedom $(1,\downarrow)$ and $(2,\downarrow)$ and simulates the hopping term involving them. As a result of this operation, the fermionic degrees of freedom will be arranged as displayed in the dashed lower rectangle 20e of **Fig. 5b.**

The techniques of the present disclosure can further comprise performing 770 a number of quantum computational operations of the plurality of quantum computational operations on the respective qubit ladder 16 (e.g., on one or more ladders from the number of ladders of the second plurality of qubits). In some cases, the number of quantum computational operations on the respective qubit ladder can be performed to simulate the unitary time evolution of the second sub-Hamiltonian within the time step (e.g., within each time step). In an example, the unitary time evolution of the second sub-Hamiltonian within the time step $\tau$ can be written as *exp(-i $\tau$ $h_2$)*, in agreement with the discussions further above. In a specific case of the first bosonic mode encoded into qubits $qb_{2,1}$ and $qb_{2,2}$ of the qubit ladder 16, such unitary time evolution within the time step $\tau$ can be written as *exp(-i $\omega$ $b^{\dagger}b$ $\tau$)*, where $\omega$ stands for the frequency of the first bosonic mode. Returning to the Hamiltonian (2) mapped onto the 2D lattice depicted in **Fig. 5a:** In some cases, quantum computational operations describing the unitary time evolution of the second sub-Hamiltonian within the time step $\tau$ in this specific example be carried out as the last, fifth step 5) of the digital quantum simulations (the arrangements of the fermionic degrees of freedom after performing the fourth step 4) is illustrated in the dashed lower rectangle 20e in **Fig. 5b).**

In the present disclosure, it can be said that the unitary time evolution of the physical system determined by the Hamiltonian $\mathcal{H}$ is simulated within a single time step (e.g., within the time step $\tau$) when all numbers of available quantum computational operations described above and number of quantum computational operations from the plurality of quantum computational operations on the respective qubit ladder 16 are completed. As mentioned further above, this procedure can be repeated to propagate the unitary time evolution over a predetermined time interval (e.g., over the time interval $T = n \cdot \tau$, where $n$ is an integer number as disclosed further above).

In the present specification, each of the bosonic creation operator and the bosonic annihilation operator can be decomposed in a superposition of Pauli operators and/or products of the Pauli operators, wherein each Pauli operator can act on a quantum state of one of the qubits of the respective qubit ladder (e.g., on each qubit of the respective ladder) that encodes the corresponding bosonic mode. Here the Pauli operator is one of the Pauli $X$-, $Y$- or $Z$ operators. In a specific case of the first bosonic mode encoded into qubits $qb_{2,1}$ and $qb_{2,2}$ of the qubit ladder 16 shown in **Fig. 5a,** the bosonic number operator can be represented in the binary encoding by: $b^\dagger b$ = 3/2 - $2Z_2$ - $Z_1$. Here $Z_1$ stands for the Pauli Z-operator acting on the qubit $qb_{2,1}$ and $Z_2$ is the Pauli Z-operator acting on the qubit $qb_{2,2}$ of the ladder 16 of **Fig. 5a.** Thus, the unitary time evolution within the time step $\tau$ can be written in this specific example as:

$$exp\left(-i\ \omega\ b^\dagger b\ \tau\right) =$$
$$exp(-i\omega(3/2 - 2Z_2 - Z_1)\tau) \approx exp(-i\ 3\omega\tau/2)\ exp(2i\ \omega\ Z_2\tau)\ exp(i\ \omega\ Z_1\tau).$$

In the method of the first aspect, the above decomposition may be implemented as a sequence of single-qubit rotations known for those skilled in the art.

In the techniques of the present disclosure, performing 720; 750 the number of available quantum computational operations from the plurality of quantum computational operation involving the two adjacent qubits (q1, q2) of the number of chains of the first plurality of qubits and the respective qubit ladder 16 having the qubit ($qb_{2,1}$) being adjacent to the one (q2) of said adjacent qubits (q1, q2) of the number of chains of the first plurality of qubits can comprise using a number of quantum two-qubit gates and/or single qubit gates arranged in a corresponding order that act on the two adjacent qubits (q1, q2) of the number of chains of the first plurality of qubits. In some cases of the present techniques, this step allows the unitary time evolution of the fermion-boson interaction term including two adjacent qubits of the number of chains of the first plurality of qubits (which encode two respective fermionic degrees) and the bosonic mode to be represented as the fermion-boson interaction term including only one of these two qubits and the bosonic mode. Returning to the embodiment of **Fig. 5a:** two qubits q2, q3 of the chain of the first plurality of qubits are adjacent qubits. One of these qubits, namely qubit q2, is also adjacent with respect to the qubit $qb_{2,1}$ of the qubit ladder 16. In the case when the physical system is governed by the Hamiltonian (2) and said system is mapped onto the 2D lattice shown in **Fig. 5a,** the fermion-boson interaction term (3) mentioned above with the fermionic degrees of freedom (1,↑) and (2,↑) encoded in the first step of the digital quantum simulations into qubits q2 and q3 can be rewritten in one non-limiting example as:

$$exp\left(-i\ g\ (c_{1,\uparrow}^\dagger c_{1,\uparrow} + c_{2,\uparrow}^\dagger c_{2,\uparrow})(b^\dagger + b)\tau\right) = exp\left(-i\ g\ Z_f\ (b^\dagger + b)\tau\right),$$

where $Z_f$ stands for the Z-Pauli matrix acting onto the qubit q2 (see **Fig. 5a).** It should be noted that the expression on the r.h.s. of the equation above requires using only the qubit q2 and two qubits $qb_{2,1}$ and $qb_{2,2}$ of the qubit ladder 16. In one example, this unitary time evolution within the time step $\tau$ can be written in the binary encoding as:

$$exp\left(-i\ g\ Z_f\ (b^\dagger + b)\tau\right) = exp\left(-i\ g\ Z_f\ (X_1 - X_1X_2/2 + Y_1Y_2/2)\tau\right)$$
$$\approx exp\left(-i\ g\tau\ Z_fX_1\right)exp\left(-i\ g\ \tau Z_f\ X_1X_2/2\right)exp\left(-i\ g\tau\ Z_f\ Y_1Y_2/2\right).$$

In the method of the first aspect, the above decomposition may be implemented as a sequence of single-qubit rotations and controlled NOT (CNOT) operations as exemplified in Figs. 6a to 6c and elucidated in detail below.

The next step of the method can comprise performing a number of quantum computational operations involving i) the one (q2) of said adjacent qubits (q1, q2) of the number of chains of the first plurality of qubits that is adjacent to the qubit ($qb_{2,1}$) of the respective qubit ladder, ii) the qubit of the respective qubit ladder ($qb_{2,1}$) that is adjacent to the one (q2) of said adjacent qubits of the number of chains of the first plurality of qubits, and iii) one or more qubits ($qb_{2,2}$) of the respective qubit ladder that are not adjacent to the one of said adjacent qubits of the number of chains of the first plurality of qubits. For the sake of illustration, the implementation of of these three steps i), ii) and iii) will be elucidated using three non-limiting examples of quantum circuits to simulate the unitary transformations $exp( -i\ g\tau\ Z_fX_1)$, $exp( -i\ g\ \tau Z_f\ X_1X_2/2)$ and $exp( -i\ g\tau\ Z_f\ Y_1Y_2/2)$, which are shown in, respectively, **Figs. 6a, 6b** and **6c.**

In the present techniques, performing the aforementioned number of quantum computational operations involving i), ii) and iii) can include applying a basis rotation transformation 40 to the qubit $qb_{2,1}$ of the respective qubit ladder that is adjacent to the one (q2) of said adjacent qubits of the number of chains of the first plurality of qubits. The next step of the method can include applying a basis rotation transformation 41 to the one or more qubits ($qb_{2,2}$) of the respective qubit ladder that are not adjacent to the one (q2) of said adjacent qubits of the number of chains of the first plurality of qubits, wherein the basis rotation transformation corresponds to rotating a predetermined axis on a rotation axis (e.g., on the $z$ - axis) of the respective qubit. In the embodiment of **Fig. 6b,** one Hadamard gate, $H$, 40 can be applied to qubit $qb_{2,1}$ of **Fig. 5a** that is adjacent to qubit q2 and another Hadamard gate, $H$, 41 to qubit $qb_{2,2}$ that is not adjacent to qubit $qb_{2,1}$ of the qubit ladder. In an example, the Hadamard gate can covert between the z- and x-basis. In the embodiment of **Fig. 6c,** $R_X(\pi/2)$ stands for a basis rotation transformation that is a rotation operator for converting between the z- and y-basis. Then, the method of the first aspect can comprise applying a controlled NOT (CNOT) operation 42 between the one (q2) of said adjacent qubits of the number of chains of the first plurality of qubits that is adjacent to the qubit ($qb_{2,1}$) of the respective qubit ladder and the qubit ($qb_{2,1}$) of the respective qubit ladder (this CNOT operation is shown by a reference sign 42 in **Figs. 6a** to **6c).**

The method of the first aspect can further comprise iteratively applying a number of successive CNOT operations 43 between two subsequent qubits ($qb_{2,1}$; $qb_{2,2}$) of the respective qubit ladder, starting from the qubit ($qb_{2,1}$) of the respective qubit ladder that is adjacent to the one of said adjacent qubits of the number of chains of the first plurality of qubits, and proceeding with the one or more qubits ($qb_{2,2}$) of the respective qubit ladder, if the one or more qubits comprises at least two qubits of the respective qubit ladder (see a reference sign 43 in **Figs. 6b** and **6c).** The next step of the present technique can include a rotation transformation ($R_Z(\gamma)$) 44 around the rotation axis to the last qubit $qb_{2,2}$ among the one or more qubits of the respective qubit ladder at which applying the number of CNOT operation terminates. In some cases, the rotation transformation around the rotation axis applied to the last qubit among the one or more qubits of the respective qubit ladder can be defined by a predetermined rotation angle around the rotation axis. In some examples, the predetermined rotation angle can be proportional to a product of the time step and a coupling strength between fermionic degrees of freedom encoded by the two adjacent qubits of the number of chains of the first plurality of qubits and a bosonic mode encoded by the respective qubit ladder. In a specific example of the unitary transformations simulated in **Figs. 6a, 6b** and **6c,** the predetermined rotation angle around the rotation axis can be given by: $\gamma = g\ \tau$.

The next step of the present techniques can comprise iteratively applying the number of successive CNOT operations 45 between two subsequent qubits ($qb_{2,2}$; $qb_{2,1}$) of the respective qubit ladder in reverse order, starting from the last qubit ($qb_{2,2}$) among the one or more qubits of the respective qubit ladder, and proceeding to the qubit ($qb_{2,1}$) of the respective qubit ladder that is adjacent to the one of said adjacent qubits of the number of chains of the first plurality of qubits, if the one or more qubits comprises at least two qubits of the respective qubit ladder (see a reference sign 45 in **Figs. 6b** and **6c).** The next step of the method can comprise applying the CNOT operation 46 between the one (q2) of said adjacent qubits of the number of chains of the first plurality of qubits that is adjacent to the qubit ($qb_{2,1}$) of the respective qubit ladder and the qubit ($qb_{2,1}$) of the respective qubit ladder (see a reference sign 46 in **Figs. 6a** to **6c).** In the next step of the method, an inverse basis rotation transformation 47 can be applied to the one or more qubits ($qb_{2,2}$) of the respective qubit ladder that are not adjacent to the one (q2) of said adjacent qubits of the number of chains of the first plurality of qubits (see a reference sign 47 in **Figs. 6b** and **6c).** The next step the present techniques can include applying an inverse basis rotation transformation 48 to the qubit ($qb_{2,1}$) of the respective qubit ladder that is adjacent to the one (q2) of said adjacent qubits of the number of chains of the first plurality of qubits (see a reference sign 48 in **Figs. 6a** to **6c).** The inverse basis rotation transformation of the first aspect can correspond to rotating the rotation axis of the respective qubit back to the predetermined axis. In some examples, the inverse basis rotation transformation can be defined as a transformation defined by an operator (or its respective matrix representation) that is Hermitian conjugate with respect to the operator defining the basis rotation transformation. In some embodiments of the present techniques, the rotation axis can be the z- axis.

In some examples of the present techniques, one or more CNOT operations used above can be carried out by respective quantum CNOT gates. In addition or alternatively, the one or more CNOT operations may comprise a respective decomposition of said one or more CNOT operations into corresponding quantum operations carried out by native hardware gates, which, are gates available at a specific architecture of a quantum computer and/or a qubit topology.

In the techniques of the present disclosure, the step 770 of performing the number of quantum computational operations of the plurality of quantum computational operations on the respective qubit ladder 16 can comprise performing a number of quantum computational operations involving i) the qubit ($qb_{2,1}$) of the respective qubit ladder that is adjacent to the one (q2) of said adjacent qubits (q1, q2) of the number of chains of the first plurality of qubits, and ii) the one or more qubits ($qb_{2,2}$) of the respective qubit ladder that are not adjacent to the one of said adjacent qubits of the number of chains of the first plurality of qubits. In some cases, these steps i) and ii) can be carried out in a manner similar to steps ii) and iii) disclosed in connection with the performing steps 720; 750 and **Figs. 6a** to **6c** above. In some embodiments related to the implementation of the performing step 770, the predetermined rotation angle can be proportional to a product of the time step and a frequency of the bosonic mode encoded by the respective qubit ladder. In a specific example, the predetermined rotation angle around the rotation axis can be given by: $\gamma = \omega \tau$.

The techniques of the present disclosure can further comprise performing a quantum computational task, wherein the quantum computational task comprises the plurality of quantum computational operations performed on the number of chains of the first plurality of qubits and the number of ladders of the second plurality of qubits. In addition, the quantum computational task can further comprise a plurality of quantum computational operations performed on one or more auxiliary chains of qubits of the first plurality of qubits. In some cases, the quantum computational task can further comprise a plurality of quantum computational operations performed on the third pluralities of qubits. In the techniques of the present disclosure, one or more of the plurality of quantum computational operations can be performed to simulate the unitary time evolution of the quantum Hamiltonian of the physical system on the quantum computing system within the time step (e.g., each time step). In the first aspect, multiple quantum computational operations can comprise respective number of the one or more plurality of quantum computational operations that are performed to simulate the unitary time evolution of the quantum Hamiltonian of the physical system within the predetermined time interval.

In some cases, the quantum computational task can comprise one or more problems in the fields of simulation of quantum systems, computational chemistry, computational biology, solid-state physics, quantum annealing, quantum machine learning, search problems, cryptography, or the like. In some examples, one or more quantum computational operations can be performed in parallel on different plurality of qubits. For example, a first number of computational operations can be performed sequentially on a first number of qubits from the number of chains of the first plurality of qubits and in parallel with a second number of computational operations on second number of qubits from said number of chains during a first time interval. Alternatively or additionally, a third number of computational operations can be performed sequentially on a first number of qubits from one qubit ladder of the second plurality of qubits and in parallel with a fourth number of computational operations carried out on another qubit ladder of the second plurality of qubits during the same or different time interval.

A second aspect provides a quantum computing system 1000 configured in accordance with any of the steps of the techniques according to the first aspect.

A third aspect provides a quantum computing system to perform the plurality of quantum computational operations and adapted to carry out any of the steps of the techniques according to the first aspect.

In some examples, the quantum computing system of the third aspect is configured in accordance with the quantum computing system of the second aspect. The present disclosure also relates to a computer program adapted to perform any of the steps of the techniques according to the first aspect. The present disclosure also relates to a computer-readable medium (e.g., machine-readable storage medium such as optical storage medium or read-only memory, e.g., FLASH memory) and signals that store or encode the computer program of the present disclosure.

The quantum computing system of the second and/or third aspect may include at least one processor (e.g., a quantum processor), at least one memory (which may include programs that, when executed, carry out the method steps according to the first aspect or the computer program of the present disclosure), and at least one interface for inputs and outputs. In some examples, the quantum computing system can comprise a hardware architecture comprising, for example, one or any combination of one or more chips, a quantum data plane, a control plane, a measurement plane, a control processor plane, a host processor, or the like. The hardware architecture of the quantum computing system of the second and/or third aspect can be based on qubits coupled to high-finesse cavities (e.g., superconducting qubits coupled to a microwave cavity), as described further above. In other examples, the quantum computing system can comprise a hardware architecture based on qubits realized as the nuclear spin states of donor atoms embedded into a respective host lattice. In still other examples, the quantum computing system can comprise a hardware architecture based on neutral atoms in optical lattices. In some examples, the quantum computing system can be a stand-alone computer device. In other examples, the quantum computing system can be integrated in a computer device or system which also serves other purposes than carrying out the steps of the techniques of the present disclosure. In yet other examples, the quantum computing system may be a distributed system that communicates over a network (e.g., the Internet).

A fourth general aspect of the present disclosure relates to a remote computing system comprising a quantum computing system and configured to perform a quantum computational task, wherein the quantum computational task comprises a plurality of quantum computational operations in accordance with the first aspect. The plurality of quantum computational operations of the fourth aspect (carried out by the remote computing system) can be performed in accordance with any one of the method steps of the first aspect. In some examples, the remote computing system may be configured to receive inquiry from a computer-implemented system (which is, e.g., external with respect to the remote computing system) regarding the quantum computational task. The remote computing system of the fourth aspect is further configured to transmit results of the computational task (e.g., based on the controlled quantum computational operations performed on it) to a computer-implemented system (e.g., to the computer-implemented system from which the inquiry was sent). In some examples, a hardware architecture of the quantum computing system of the fourth aspect can comprise one or more building elements (or blocks of elements) of the hardware architecture of the quantum computing system from the second and/or third aspect disclosed above. In some cases, the hardware architecture of the quantum computing system of the fourth aspect may be the same as the hardware architecture of the quantum computing system from the second and/or third aspect disclosed above.

**Claims**

1. A method for configuring a quantum computing system (1000), wherein the quantum computing system comprises a plurality of qubits arranged on a two-dimensional, 2D, lattice and configured to perform a plurality of quantum computational operations, the method comprising:

   receiving a selection (100) of a first plurality of qubits (15a-15c; 1a-1d; 3a-3c) of the plurality of qubits, wherein the first plurality of qubits comprises a number of chains of qubits,
   wherein each qubit (1a-1d) of the number of chains (15a-15b) of the first plurality of qubits represents a first degree of freedom related to respective constituents of a physical system to be mapped onto the number of chains of the first plurality of qubits,
   wherein each qubit (q1) of the first plurality of qubits is configured to transmit a quantum information of said qubit to another qubit (q2) of the first plurality of qubits that is adjacent to said qubit,
   wherein the other qubit of the first plurality of qubits is configured to receive the quantum information of said qubit of the first plurality of qubits;
   receiving a selection (200) of a second plurality of qubits (16; 16a-16e; 2a-2d) of the plurality of qubits, wherein the second plurality of qubits comprises a number of ladders of qubits,
   wherein each ladder of qubits represents a second degree of freedom related to respective constituents of the physical system to be mapped onto the number of ladders of the second plurality of qubits,
   wherein the second degree of freedom is different from the first degree of freedom,
   wherein each qubit (2a; 2c) of the second plurality of qubits is configured to transmit the quantum information of said qubit to another qubit (2b; 2d) of the second plurality of qubits that is adjacent to said qubit,
   wherein the other qubit of the second plurality of qubits is configured to receive the quantum information of said qubit of the second plurality of qubits,
   wherein one or more qubits (1a; 1c) of the number of chains of the first plurality of qubits are adjacent to respective one or more qubits (2a; 2c) of the number of ladders of the second plurality of qubits and are configured to transmit the quantum information to and/or receive the quantum information from the respective one or more qubits of the number of ladders of the second plurality of qubits,
   wherein the number of chains of the first plurality of qubits and the number of ladders of the second plurality of qubits are configured to perform a plurality of quantum computational operations.

2. The method of claim 1, wherein, after carrying out the receiving selection steps of claim 1, the method includes performing (300) a plurality of quantum computational operations on the quantum computing system comprising:

   performing (400) a plurality of quantum computational operations on the number of chains (15a-15b) of the first plurality of qubits,
   wherein performing the plurality of quantum computational operations on the number of chains of the first plurality of qubits comprises exchanging the quantum information between two qubits (q1, q2) from one or more pairs (q1, q2; q2, q3) of adjacent qubits of the number of chains (15a-15b) of the first plurality of qubits;
   performing (500) a plurality of quantum computational operations on the number of ladders (16; 16a-16e) of the second plurality of qubits,
   wherein performing the plurality of quantum computational operations on the number of ladders of the second plurality of qubits comprises exchanging the quantum information between two qubits $(qb_{2,1}, qb_{2,2})$ from one or more pairs of adjacent qubits of each ladder (16; 16a-16e) from the number of ladders of the second plurality of qubits;
   exchanging (600) the quantum information between two qubits from one or more pairs of adjacent qubits (1a, 2a; 1c, 2c), wherein one qubit (1a; 1c) of the pair is from the number of chains of the first plurality of qubits and another qubit (2a; 2c) of the pair is from a respective ladder of the number of ladders of the second plurality of qubits that is adjacent to said qubit from the number of chains.

3. The method of claim 2, wherein performing (400) the plurality of quantum computational operations on the number of chains of qubits and performing (500) the plurality of quantum computational operations on the number of ladders further comprises:

performing (410) a number of quantum computational operations of the plurality of quantum computational operations on the one or more qubits (1a; 1c) of the number of chains of the first plurality of qubits that are adjacent to the respective one or more qubits (2a; 2c) of the number of ladders of the second plurality of qubits, performing (510) a number of quantum computational operations of the plurality of quantum computational operations on said respective one or more qubits (2a; 2c) of the number of ladders of the second plurality of qubits, performing (520) a number of quantum computational operations of the plurality of quantum computational operations on a number of qubits (2b; 2d) of the number of ladders of the second plurality of qubits for which no adjacent qubit from the number of chains of the first plurality of qubits is available.

4. The method of claim 3, wherein performing (400) the plurality of quantum computational operations on the number of chains of qubits further comprising: performing (420) a number of quantum computational operations of the plurality of quantum computational operations on a number of qubits of the number of chains of the first plurality of qubits for which no adjacent qubit from the number of ladders of the second plurality of qubits is available.

5. The method of any one of claims 1 to 4, wherein a qubit ladder (16) of the number of ladders of the second plurality of qubits comprises a plurality of qubits, wherein the plurality of qubits within the ladder extends in a first direction, wherein each chain of the number of chains of the first plurality of qubits extends in the first direction (15a) or in a second direction (15b) different from the first direction.

6. The method of any one of claims 1 to 5, the method further comprising receiving (250) a selection of a third plurality of qubits (17; 4a-4b) of the plurality of qubits, wherein a number of qubits of the third plurality of qubits (qR2-qR5) are adjacent to two or more ladders (16e; 16a) of the number of ladders of the second plurality of qubits and are configured to receive the quantum information from and/or transmit the quantum information to the two or more ladders from the number of ladders of the second plurality of qubits,

wherein the two or more ladders (16e; 16a) from the number of ladders of the second plurality of qubits adjacent to the number of qubits (qR2-qR5) of the third plurality of qubits are configured to transmit the quantum information to and/or receive the quantum information from the number of qubits (qR2-qR5) of the third plurality of qubits, optionally wherein the third plurality of qubits comprises one or more chains of qubits that extend in the first direction.

7. The method of any one of claims 1 to 6, wherein the quantum information of each qubit of the number of chains of the first plurality of qubits carried by said qubit comprises at least partial information about one or more first degrees of freedom, or about the one or more first degrees of freedom and one or more second degrees of freedom,

wherein the partial information carried by the qubit of the number of chains of the first plurality of qubits corresponds to a quantum state of this qubit,
wherein the quantum information of each qubit of the ladder from the number of ladders of the second plurality of qubits carried by said qubit comprises at least partial information regarding one or more second degrees of freedom, or regarding the one or more second degrees of freedom and the one or more first degrees of freedom,
wherein the partial information of each qubit of the ladder from the number of ladders corresponds to a quantum state of said qubit of the ladder.

8. The method of any one of claims 1 to 7, wherein performing (300) the plurality of quantum computational operations comprises:

initially ordering a plurality of the first degrees of freedom onto the number of chains of the first plurality of qubits, wherein each of the plurality of the first degrees of freedom is mapped onto respective qubit from the number of chains of the first plurality of qubits,
initially mapping one or more of the second degrees of freedom onto respective one or more ladders from the number of ladders of the second plurality of qubits.

9. The method of any one of claims 1 to 8, the method further comprising initializing one or more qubits from the number of chains of the first plurality of qubits and one or more qubits from the number of ladders of the second plurality of qubits to an initial quantum state,

wherein the one or more qubits from the number of chains of the first plurality of qubits and the one or more qubits from the number of ladders of the second plurality of qubits are configured to be initialized to the initial quantum state,
wherein the initial quantum state of said qubits represents a quantum state relating to the first degrees of freedom

and the second degrees of freedom,
optionally
wherein the quantum state is a product quantum state of a first quantum state relating to the first degrees of freedom and a second quantum sate relating to the second degrees of freedom,
wherein the first quantum state is represented by the one or more qubits from the number of chains of the first plurality of qubits and the second quantum state is represented by the one or more qubits from the number of ladders of the second plurality of qubits.

10. The method of any one of claims 1 to 9, wherein the first degree of freedom is a fermionic degree of freedom and the second degree of freedom is a bosonic mode, wherein performing (300) the plurality of quantum computational operations further comprises:

exchanging (700) the quantum information between each qubit from a number of odd-numbered qubits (q1; q3) of the number of chains of the first plurality of qubits and respective adjacent even-numbered qubit (q2; q4) located to a pregiven side with respect to said odd-numbered qubit, if the even-numbered qubit located to the pregiven side with respect to said odd-numbered qubit exists,
wherein the respective adjacent even-numbered qubit is a qubit from a number of even-numbered qubits of the number of chains of the first plurality of qubits,
performing (710) a number of available quantum computational operations from the plurality of quantum computational operations on one or more qubits (1a-1d) from the number of chains of the first plurality of qubits,
performing (720) a number of available quantum computational operations from the plurality of quantum computational operations involving two adjacent qubits (q1; q2) of the number of chains of the first plurality of qubits and a respective qubit ladder (16) having a qubit ($qb_{2,1}$) being adjacent to one (q2) of said adjacent qubits (q1; q2) of the number of chains of the first plurality of qubits,
wherein the respective qubit ladder is a qubit ladder from the number of ladders of the second plurality of qubits, wherein a corresponding bosonic mode is encoded by the respective qubit ladder, exchanging (730) the quantum information between each qubit from the number of even-numbered qubits (q2) of the number of chains of the first plurality of qubits and respective adjacent odd-numbered qubit (q3) located to the pregiven side with respect to said even-numbered qubit, if the odd-numbered qubit located to the pregiven side with respect to said even-numbered qubit exists,
wherein the respective adjacent odd-numbered qubit is a qubit from a number of odd-numbered qubits of the number of chains of the first plurality of qubits,
performing (740) a number of available quantum computational operations from the plurality of quantum computational operations on the one or more qubits (1a-1d) from the number of chains of the first plurality of qubits,
performing (750) a number of available quantum computational operations from the plurality of quantum computational operations involving the two adjacent qubits (q1, q2) of the number of chains of the first plurality of qubits and the respective qubit ladder (16) having the qubit ($qb_{2,1}$) being adjacent to the one (q2) of said adjacent qubits (q1, q2) of the number of chains of the first plurality of qubits,
iteratively repeating (760) the steps of exchanging information and performing the numbers of available quantum computational operations, until all numbers of available quantum computational operations from the plurality of quantum computational operations are carried out;
performing (770) a number of quantum computational operations of the plurality of quantum computational operations on the respective qubit ladder (16).

11. The method of claim 10, wherein performing (720; 750) the number of available quantum computational operations from the plurality of quantum computational operation involving the two adjacent qubits (q1, q2) of the number of chains of the first plurality of qubits and the respective qubit ladder (16) having the qubit ($qb_{2,1}$) being adjacent to the one (q2) of said adjacent qubits (q1, q2) of the number of chains of the first plurality of qubits comprises the following steps:

using a number of quantum two-qubit gates and/or single qubit gates arranged in a corresponding order that act on the two adjacent qubits (q1, q2) of the number of chains of the first plurality of qubits;
performing a number of quantum computational operations involving i) the one (q2) of said adjacent qubits (q1, q2) of the number of chains of the first plurality of qubits that is adjacent to the qubit ($qb_{2,1}$) of the respective qubit ladder, ii) the qubit of the respective qubit ladder ($qb_{2,1}$) that is adjacent to the one (q2) of said adjacent qubits of the number of chains of the first plurality of qubits, and iii) one or more qubits ($qb_{2,2}$) of the respective qubit ladder that are not adjacent to the one of said adjacent qubits of the number of chains of the first plurality of qubits.

**12.** The method of any one of claims 1 to 11, the method further comprises performing a quantum computational task, wherein the quantum computational task comprises the plurality of quantum computational operations performed on the number of chains of the first plurality of qubits and the number of ladders of the second plurality of qubits.

**13.** A quantum computing system (1000) configured in accordance with the method steps of any one of claims 1 to 12.

**14.** A quantum computing system (1000) configured to perform the plurality of quantum computational operations and adapted to perform the method steps of any one of claims 2 to 12.

**15.** Remote computing system comprising a quantum computing system (1000), the remote computing system adapted to:

perform a quantum computational task, wherein the quantum computational task comprises a plurality of quantum computational operations in accordance with the method of claim 12,
wherein the plurality of quantum computational operations are performed in accordance with the method steps of any one of claims 2 to 12;
transmit results of the computational task to a computer-implemented system.

## Fig. 1a

## Fig. 1b

EP 4 375 886 A1

Fig. 1c

500 510 520

Fig. 1d

300 700 710 720 730 740 750 760 770

# Fig. 2a

EP 4 375 886 A1

# Fig. 2b

# Fig. 3a

# Fig. 3b

EP 4 375 886 A1

**Fig. 4**

# Fig. 5a

# Fig. 5b

Fig. 6a

Fig. 6b

**Fig. 6c**

$q2$

$qb_{2,1}$

$qb_{2,2}$

40 $\quad$ 41 $\quad$ 42 $\quad$ 43 $\quad$ 44 $\quad$ 45 $\quad$ 46 $\quad$ 47 $\quad$ 48

$R_x\left(\frac{\pi}{2}\right)$ $\quad$ $R_x\left(-\frac{\pi}{2}\right)$

$R_x\left(\frac{\pi}{2}\right)$ $\quad$ $R_z(\gamma)$ $\quad$ $R_x\left(-\frac{\pi}{2}\right)$

Europäisches
Patentamt

European
Patent Office

Office européen
des brevets

# EUROPEAN SEARCH REPORT

Application Number

EP 22 20 9132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAMATA LUCAS ET AL: "Efficient quantum simulation of fermionic and bosonic models in trapped ions", EPJ QUANTUM TECHNOLOGY, vol. 1, no. 1, 1 December 2014 (2014-12-01), XP055955372, DOI: 10.1140/epjqt9 Retrieved from the Internet: URL:https://arxiv.org/pdf/1312.2849.pdf> * abstract; figures 1-3 * * 2. Results and discussion * * 3. Conclusion * | 1-15 | INV. G06N10/40 G06N10/20 |
| A | Weinberg Phillip ET AL: "to report a bug pls visit https QuSpin: a Python Package for Dynamics and Exact Diagonalisation of Quantum Many Body Systems. Contents", , 1 August 2019 (2019-08-01), XP093049846, Retrieved from the Internet: URL:https://arxiv.org/pdf/1804.06782.pdf [retrieved on 2023-05-25] * 2 How do I Use the New Features of QuSpin? * * abstract * | 1-15 | |

TECHNICAL FIELDS SEARCHED (IPC)

G06N

The present search report has been drawn up for all claims

| Place of search | Date of completion of the search | Examiner |
|---|---|---|
| The Hague | 6 June 2023 | De Meyer, Arnaud |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. GRUMBLING ; M. HOROWITZ.** Quantum Computing: Progress and Prospects. The National Academies Press, 2019
- Quantum Computation and Quantum Information. **M. A. NIELSEN ; I. L. CHUANG.** 10th Anniversary Edition. Cambridge University Press, 2010
- Quantum Computation and Quantum Information. **M. A. NIELSEN ; I. L. CHUANG.** 10th Anniversary Edition. University Press, 2010
- **G. D. MAHAN.** Many Particle Physics. Springer, 2000
- **H. F. TROTTER.** On the product of semi-groups of operators. *Proc. Amer. Math. Soc.,* 1959, vol. 10, 545-551
- **BRUUS K. ; FLENSBERG K.** Many-Body Quantum Theory in Condensed Matter Physics. An Introduction. Oxford University Press, 2007